(19) Europäisches Patentamt
European Patent Office
Office européen des brevets

(11) Veröffentlichungsnummer: **0 071 834**
**B1**

(12) # EUROPÄISCHE PATENTSCHRIFT

(45) Veröffentlichungstag der Patentschrift: **18.09.85**

(21) Anmeldenummer: **82106634.7**

(22) Anmeldetag: **23.07.82**

(51) Int. Cl.⁴: **C 08 G 18/83**, C 08 G 18/10, C 08 G 18/50, C 07 C125/06

(54) **Verfahren zur Herstellung von Polyaminen und deren Verwendung zur Herstellung von Polyurethanen.**

(30) Priorität: **07.08.81 DE 3131252**

(43) Veröffentlichungstag der Anmeldung: **16.02.83 Patentblatt 83/07**

(45) Bekanntmachung des Hinweises auf die Patenterteilung: **18.09.85 Patentblatt 85/38**

(84) Benannte Vertragsstaaten: **AT BE CH DE FR GB IT LI NL SE**

(56) Entgegenhaltungen:
**EP-A- 0 050 275**
**DE-A- 2 948 419**
**FR-A- 1 415 317**
**US-A- 2 888 439**

(73) Patentinhaber: **BAYER AG**
**Konzernverwaltung RP Patentabteilung**
**D-5090 Leverkusen 1 Bayerwerk (DE)**

(72) Erfinder: **Rasshofer, Werner, Dr.**
**Wolfskaul 10**
**D-5000 Koeln 80 (DE)**
Erfinder: **Grögler, Gerhard, Dr.**
**von-Diergardt-Strasse 46**
**D-5090 Leverkusen 1 (DE)**
Erfinder: **König, Klaus, Dr.**
**Heymannstrasse 50**
**D-5090 Leverkusen 1 (DE)**
Erfinder: **Dieterich, Dieter, Dr.**
**Ludwig-Girtler-Strasse 1**
**D-5090 Leverkusen 1 (DE)**

EP 0 071 834 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein vereinfachtes Verfahren zur Herstellung von Polyaminen durch alkalische Hydrolyse von endständige aromatische und/oder aliphatische Isocyanatgruppen aufweisenden Verbindungen mit einem NCO-Gehalt von 0,5 bis 40 Gew.-% mittels starker Basen, wobei eine direkte Isolierung der Polyamine aus der Carbamatstufe durch thermische Carbamatzerlegung und/oder Lösungsmittelextraktion möglich wird. Als Isocyanatgruppen aufweisende Verbindungen werden modifizierte Isocyanate oder NCO-Prepolymere bzw. Semiprepolymere eingesetzt.

Es ist bekannt, daß aromatische Isocyanate durch saure Hydrolyse in primäre aromatische Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiterreagiert. Diese Folgereaktion läßt sich auch durch Anwendung überschüssiger starker Mineralsäure nicht unterdrücken. Ein neueres Beispiel findet sich in der JP-PS 55 007 827.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Tri-isocyanaten mit Polyalkylenglykolethern und/oder Polyalkylenglykolthioethern, vorzugsweise solchen mit Molekulargewichten zwischen 400 und 4 000, mit sekundären oder tertiären Carbinolen umsetzt und anschließend (gegebenenfalls in Gegenwart saurer Katalysatoren) in einem inerten Lösungsmittel einer thermischen Spaltung bei hohen Temperaturen unterwirft. Nachteilig ist dabei neben der hohen Spalttemperatur, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 is die Herstellung von mindestens 2 endständige Aminogruppen aufweisenden Prepolymeren durch Umsetzung von Hydrazin, Aminophenylethylamin oder anderen Diaminen mit einem NCO-Prepolymer aus einem Polyetherpolyol und Polyisocyanat (NCO : NH-Verhältnis = 1 : 1,5 bis 1 : 5). Nicht-umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner auftritt.

Eine andere Synthesemöglichkeit für Urethangruppen aufweisende Polyamine wird in der FR-PS 1 415 317 beschrieben. Urethangruppenhaltige NCO-Prepolymere werden mit Ameisensäure in die N-Formylderivate überführt, die zu endständigen aromatischen Aminen verseift werden. Auch die Reaktion von NCO-Prepolymeren mit Sulfaminsäure gemäß DE-B 1 155 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder gemäß US-PS 3 044 989 durch Umsetzung höhermolekularer Polyhydroxylverbindungen mit Acrylnitril unter anschließender katalytischer Hydrierung. Auch durch Umsetzung von NCO-Prepolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen. Eine weitere Synthesemöglichkeit für Urethan- und Ethergruppen aufweisende aromatische Polyamine liegt in der bei der Reaktion von Isatosäureanhydrid und Diolen eintretenden Ringöffnung. Solche Polyamine sind z. B. beschrieben in der US-PS 4 180 644 und der DE-A 2 019 432, 2 619 840, 2 648 774 und 2 648 825. Nachteilig für viele Zwecke ist die geringe Reaktivität der solcherart erhaltenen, aromatischen Esteramine.

Auch die Reaktion von Nitroarylisocyanaten mit Polyolen und nachfolgender Reduktion der Nitrogruppen zu aromatischen Amingruppen ist bekannt (US-PS 2 888 439). Nachteilig sind hier vor allem die hohen Kosten des Reduktionsschrittes. Die Patentschrift beschreibt auch die saure Hydrolyse von NCO-Prepolymeren.

Es ist auch bekannt, daß gewisse heteroaromatische Isocyansäureester durch basische Hydrolyse in heteroaromatische Amine überführt werden können. Die bei H. John, J. Prakt. Chemie 130, 314 f bzw. 332 f (1931) für zwei ganz bestimmte, heteroaromatische Monoisocyansäureester, genannten Hydrolysebedingungen sind aber für die Überführung von Poly-NCO-Verbindungen in aliphatische und/oder aromatische Amine nicht nur völlig ungeeignet, sondern darüber hinaus auch gefährlich.

Gegenstand eigener Vorschläge nach DE-A 29 48 419.3 und DE-A 30 39 600.0 waren mehrstufige Verfahren zur Herstellung von Polyaminen durch alkalische Hydrolyse von NCO-Voraddukten mittels überschüssiger starker Basen (wäßrigen Lösungen von Alkali- oder Erdalkalihydroxiden oder Tetraalkylammoniumhydroxyden) zu Carbamaten, Ansäuern mittels über die Basenmenge hinaus überschüssiger Mengen an Mineralsäuren oder Ionenaustauscherharzen unter Carbamatzersetzung, gegebenenfalls Neutralisation überschüssiger Säuremengen mittels Basen und anschließende Isolierung der Polyamine.

Überraschenderweise wurde nun gefunden, daß man aromatische und/oder aliphatische Polyamine gewinnt, wenn man freie NCO-Gruppen aufweisende Verbindungen mit einem NCO-Gehalt zwischen 0,5 und 40 Gew.-% mit starken Basen (wäßrigen Lösungen von Alkali- oder Erdalkalihydroxiden Alkalisilikaten oder Alkalialuminaten oder Tetraalkylammoniumhydroxiden) zur Reaktion bringt und aus den entstandenen, Carbamatgruppen aufweisenden Verbindungen die Polyamine in schonender Weise und ohne Umsetzungsstufen mit weiteren zuzuführenden Reaktionspartnern durch thermische Zerlegung und/oder

Extraktion des Carbamatgruppen aufweisenden Verbindungen enthaltenden Reaktionsgemischs gewinnt.

Gegenstand der Erfindung ist somit ein Verfahren zur Herstellung von aromatischen und/oder aliphatischen, primären Polyaminen durch Hydrolyse von freie Isocyanatgruppen aufweisenden Verbindungen, dadurch gekennzeichnet, daß man

I. aromatische und/oder aliphatische, freie NCO-Gruppen aufweisende modifizierte Isocyanate, NCO-Prepolymer oder Semiprepolymere mit einem NCO-Gehalt zwischen 0,5 und 40 Gew.-%, bevorzugt 1,2-25 Gew.-%, besonders 1,5-15 Gew.-%, gegebenenfalls gelöst in einem NCO-inerten Lösungsmittel, durch Vermischen mit starken Basen und mindestens der stöchiometrisch notwendigen Menge an Wasser in Carbamatgruppen aufweisende Verbindungen überführt und

II. zwecks Gewinnung des Polyamins direkt aus der Carbamatgruppen aufweisenden Verbindungen enthaltenden Reaktionsmischung diese Reaktionsmischung entweder

a) unter Zerlegung der Carbamatgruppen in der Reaktionsmischung thermisch bei Temperaturen bis 200 °C behandelt und das Polyamin abtrennt oder

b) mit einem organischen Lösungsmittel extrahiert und gegebenenfalls das Polyamin aus der Lösungsmittelphase extrahiert.

Gegenüber herkömmlichen Verfahren besitzt das vorliegende Verfahren folgende Vorteile :

1. Die Umwandlung der NCO-Verbindungen in Amine erfolgt als Eintopfverfahren in einfacher und wirtschaftlicher Verfahrensform.

2. Die den NCO-Verbindungen zugrundeliegenden Komponenten (modifizierte Polyisocyanate, Polyisocyanate, Polyole, Amine etc.) sind preiswerte, in großen Mengen verfügbare Produkte.

3. Die Reaktionsausbeuten sind praktisch quantitativ und die Raum/Zeit-Ausbeute ist hoch.

4. Herkömmliche Kesselapparaturen genügen ohne besondere apparative Vorkehrungen.

5. Das Verfahren ist jedoch auch vorteilhaft kontinuierlich durchzuführen.

6. Das Verfahren ist umweltfreundlich, da ohne Lösungsmittel gearbeitet werden kann, lediglich geringe Mengen Kohlendioxyd in Freiheit gesetzt werden und nur die geringstmöglichen Salzmengen (kohlensaure Salze aus den Basen) anfallen.

Gegenstand der Erfindung ist ferner die Verwendung der nach dem erfindungsgemäßen Verfahren zugänglichen, aromatische und/oder aliphatische, primäre $NH_2$-Gruppen aufweisenden Polyamine zur Herstellung von Polyurethanen wie gegebenenfalls zellförmigen Polyurethankunststoffen und Polyurethanschaumstoffen, durch Umsetzung von :

A) Polyisocyanaten und/oder blockierten Polyisocyanaten, mit

B) Polyaminen, sowie gegebenenfalls

C) weiteren, niedermolekularen und/oder höhermolekularen Verbindungen mit gegenüber Isocyanaten reaktiven Gruppen, gegebenenfalls

D) in Anwesenheit an sich bekannter Hilfs- und Zusatzstoffe,

wobei als Komponente B) die nach dem erfindungsgemäßen Verfahren hergestellten Polyamine eingesetzt werden.

Die aromatische und/oder aliphatische, freie NCO-Gruppen aufweisenden, im erfindungsgemäßen Verfahren einsetzbaren NCO-Verbindungen (im folgenden auch kurz « NCO-Verbindungen » genannt) stellen entweder

modifizierte Polyisocyanate dar, wie sie durch teilweise Umwandlung der Isocyanatgruppen in Harnstoff-, Biuret-, oder Uretdion- oder Isocyanuratgruppen entstehen,

oder sind sogenannte NCO-Prepolymere aus gegenüber NCO-Gruppen reaktiven H-Gruppen tragenden, mehrwertigen Verbindungen des Molekulargewichts 18 bis 12 000 und (überschüssigen) Mengen an Polyisocyanaten oder sind gegebenenfalls Semiprepolymere aus NCO-Prepolymeren und zusätzlichen Polyisocyanaten.

Als modifizierte Polyisocyanate sind beispielsweise geeignet :

Harnstoffgruppen aufweisende Polyisocyanate (Wasser-Modifizierung) sind z. B. in der DE-PS 1 230 778, Biuretgruppen aufweisende Polyisocyanate in den US-PS 3 124 605, 3 201 372 sowie in der GB-PS 889 050, Isocyanuratgruppen aufweisende Polyisocyanate in der US-PS 3 001 973 und in den DE-PS'en 1 022 789 und 1 222 067 beschrieben.

Uretdiongruppen enthaltende, dimere oder oligomere Polyisocyanate sind bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Harnstoff- und/oder Biuret- und/oder Uretdion- und/oder Isocyanuratgruppen, wie sie im erfindungsgemäßen Verfahren einsetzbar sind, haben üblicherweise einen NCO-Gehalt von 5 bis 37,5 Gew.-%, bevorzugt 10 bis 25 Gew.-% und sind im wesentlichen frei von Urethangruppen.

Die im erfindungsgemäßen Verfahren eingesetzten NCO-Verbindungen sind besonders jedoch NCO-Prepolymere, wie sie in an sich bekannter Weise durch Umsetzung von hoch- und/oder niedermolekularen, Hydroxy- und/oder Amino- und/oder Thiolgruppen als reaktive Gruppen enthaltenden Verbindungen (Molekulargewicht 60 bis ca. 12 000) mit einem Überschuß an Polyisocyanat entstehen.

Als Polyisocyanate zur Herstellung der freie NCO-Gruppen aufweisenden Verbindungen kommen im Prinzip beliebige, von hydrolysierbaren Gruppen, abgesehen von den NCO-Gruppen, im wesentlichen,

freie, aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n 2 bis 4, vorzugsweise 2 und

Q einen aliphatischen Kohlenwasserstoffrest mit 3 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen,

bedeuten, z. B. 1,4-Tetramethylendiisocyanat, 1,6-Hexamethylendiisocyanat, 1,12-Dodecandiisocyanat, ferner cycloaliphatische Diisocyanate in beliebigen Mischungen ihrer Stellungs- und/oder Stereoisomeren, z. B. Cyclobutan-1,3-diisocyanat, Cyclohexan-1,3- und -1,4-diisocyanat, 1-Isocyanato-3,3,5-trimethyl-5-isocyanatomethylcyclohexan, 2,4- und 2,6-Hexahydrotoluylendiisocyanat, Hexahydro-1,3- und/oder -1,4-phenylendiisocyanat, Perhydro-2,4'- und/oder -4,4'-diphenylmethandiisocyanat; insbesondere sind jedoch aromatische Diisocyanate geeignet, z. B. 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, einschließlich seiner Alkyl- und Chlorsubstituierten Derivate und Naphthylen-1,5-diisocyanat. Geeignete Diisocyanate sind auch die in DE-A 2 922 966 beschriebenen 2,4'-Diisocyanatodiphenylsulfide und 2-(ω-Isocyanatoalkyl)-phenylisocyanate und die in z. B. EP 24 665 und DE-A 2 935 318 beschriebenen alkylsubstituierten Diphenylmethandiisocyanate.

Ferner kommen beispielsweise in Frage: Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-PS'en 874 430 und 848 671 beschrieben werden, m- und p-Isocyanatophenylsulfonyl-isocyanate gemäß der US-PS 3 454 606, perchlorierte Arylpolyisocyanate, wie sie z. B. in der DE-Auslegeschrift 1 157 601 (US-PS 3 277 138) beschrieben werden, Norbornen-Diisocyanate gemäß US-PS 3 492 330, Isocyanuratgruppen aufweisende Polyisocyanate, wie sie z. B. in der US-PS 3 001 973, in den DE-PS'en 1 022 789, 1 222 067 und 1 027 394 sowie in den DE-PS'en 1 929 034 und 2 004 048 beschrieben werden, Urethangruppen aufweisende Polyisocyanate, wie sie z. B. in der BE-PS 752 261 oder in den US-PS'en 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z. B. in der US-PS 3 654 196 beschrieben werden.

Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenylpolymethylen-polyisocyanate, wie sie durch Anilin-Formaldehyd-Kondensation und anschließende Phosgenierung hergestellt werden (« rohes MDI »), sowie Urethangruppen, Isocyanuratgruppen oder Harnstoffgruppen aufweisende Polyisocyanate (« modifizierte Polyisocyanate »), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Für die Herstellung der NCO-Prepolymeren werden vorzugsweise höhermolekulare Verbindungen mit einem Molekulargewicht von 400 bis 12 000, insbesondere 400 bis 6 000, eingesetzt, welche mindestens 2, vorzugsweise 2 bis 4, insbesondere 2 bis 3, reaktive Hydroxyl-, Amino- und/oder Thiolgruppen (bevorzugt Hydroxylgruppen) als reaktive Gruppen aufweisen und frei an leicht hydrolysierbaren Gruppen, wie z. B. Estergruppen, sind. In Frage kommen beispielsweise die in der Polyurethanchemie üblichen, gegenüber Isocyanaten reaktive Gruppen tragenden Polyacetale, Polythioether, Polycarbonate, Polyamide, Polysiloxane und/oder Polybutadiene, insbesondere aber Hydroxylgruppen tragende Polyether.

Die erfindungsgemäß in Frage kommenden mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether sowie auf Formit oder Formose gestartete Polyether kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Auch OH-, NH- und/oder SH-Gruppen aufweisende Polybutadiene sind erfindungsgemäß geeignet (s. Progress Org. Coatings, Band 7 (3), 289-329 (1979)).

Als Polyacetale kommen z. B. die aus Glykolen, wie Di- oder Tri-ethylenglykol, 4,4'-Dihydroxyethoxydiphenyl-methan, Hexandiol und Formaldehyd herstellbaren Verbindungen in Frage. Auch durch

Polymerisation cyclischer Acetale wie z. B. Trioxan lassen sich erfindungsgemäß geeignete Polyacetale herstellen.

Als Hydroxylgruppen aufweisende Polycarbonate kommen solche der an sich bekannter Art in Betracht, die z. B. durch Umsetzung von Diolen wie Propandiol-(1,3), Butandiol-1,4 und/oder Hexandiol-1,6, Di-, Tri- oder Tetra-ethylenglykol oder Thiodiglykol mit Diarylcarbonaten, z. B. Diphenylcarbonat, oder Phosgen hergestellt werden können (DE-B 1 694 080, 1 915 908 und 2 221 751 ; DE-A 2 605 024).

Zu den Polyamiden zählen z. B. die aus mehrwertigen gesättigten oder ungesättigten Carbonsäuren bzw. deren Anhydriden und mehrwertigen gesättigten oder ungesättigten Diaminen, Polyaminen und deren Mischungen gewonnenen, vorwiegend linearen Kondensate.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harze oder auch an Harnstoff-Formaldehyd-Harze sind erfindungsgemäß einsetzbar.

Die genannten Polyhydroxylverbindungen können vor ihrer Verwendung noch in der verschiedensten Weise modifiziert werden. So läßt sich ein Gemisch aus verschiedenen Polyhydroxylverbindungen durch Veretherung in Gegenwart einer starken Säure zu einem höhermolekularen Polyol kondensieren, welches aus über Etherbrücken verbundenen verschiedenen Segmenten aufgebaut ist. Es ist auch möglich, in die Polyhydroxylverbindungen Amidgruppen einzuführen.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden Verbindungen ablaufen läßt. Derartige Verfahren sind beispielsweise in den DE-B 1 168 075 und 1 260 142, sowie den DE-A 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-PS 3 869 413 bzw. 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie z. B. durch Polymerisation von Styrol und Acrylnitril in Gegenwart von Polyethern (US-PS 3 383 351, 3 304 273, 3 523 093, 3 110 695 ; DE-B 1 152 536) oder Polycarbonatpolyolen (DE-PS 1 769 795 ; US-PS 3 637 909) erhalten werden, sind für das erfindungsgemäße Verfahren geeignet. Bei Verwendung von Polyetherpolyolen, welche gemäß DE-A 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit; Polyhydroxylverbindungen, in welche durch radikalische Pfropfpolymerisation mittels ungesättigter Carbonsäuren sowie gegenbenenfalls weiterer olefinisch ungesättigter Monomerer Carboxylgruppen eingeführt wurden (DE-A 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der obengenannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, Müchen, 1966, z. B. auf den Seiten 45-71, beschrieben. Selbstverständlich können Mischungen der obengennanten Verbindungen mit mindestens zwei gegenüber Isocyanaten reaktionsfähigen Wasserstoffatomen mit einem Molekulargewicht von 400 bis 12 000, z. B. Mischungen von verschiedenen Polyethern, eingesetzt werden.

Für die Herstellung des im erfindungsgemäßen Verfahren einzusetzenden NCO-Prepolymeren kommen, gegebenenfalls nur anteilweise, als Ausgangskomponenten auch Verbindungen mit mindestens zwei gegenüber Isocyanaten reaktionsfähigen Wasserstoffatomen und einem Molekulargewicht von 18 bis 399, vorzugsweise 60 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 18 bis 399 verwendet werden.

Als Beispiele für derartige Verbindungen seien genannt : Wasser, Ethylenglykol, Propylenglykol-(1,2)

und -(1,3), Butylenglykol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Dibrombutendiol (US-PS 3 723 392), Glyzerin, Trimethylolpropan, Hexantriol-(1,2,6), Trimethylolethan, Pentaerythrit, Chinit, Mannit und Sorbit, Dianhydrosorbit und Dianhydromannit, Ricinusöl, Di-, Tri- und Tetraethylenglykol, Di-, Tri, und Tetrapropylenglykol, Dibutylenglykol und höhere Polyethylen-, Polypropylen- oder Polybutylenglykole mit einem Molekulargewicht bis 399, 4,4'-Dihydroxy-diphenylporpan, Di-hydroxy-ethyl-hydrochinon, Ethanolamin, Diethanolamin, N-Methyldiethanolamin, Triethanolamin und 3-Aminopropanol.

Als niedermolekulare Polyole kommen auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-A 2 639 084, 2 714 084, 2 714 104, 2 271 186, 2 738 154 und 2 738 512).

Erfindungsgemäß geeignete aliphatische Diamine sind beispielsweise Ethylendiamin, 1,4-Tetramethylendiamin, 1,6-Hexamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diamino-per-hydroanthrazene (DE-A 2 638 731) und cycloaliphatische Triamine gemäß DE-A 2 614 244. Auch Hydrazin und substituierte Hydrazine, z. B. Methylhydrazin, kommen erfindungsgemäß in Betracht.

Als Beispiele für aromatische Diamine seien die Ethergruppen aufweisenden Diamine gemäß DE-A 1 770 525 und 1 809 172 (US-PS'en 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diaminodiphenylmethan, Toluylendiamin, 4,4'-Diaminodiphenylmethan, 4,4'-Diaminodiphenyldisulfide (DE-A 2 404 976), Diaminodiphenyldithioether (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Zur Herstellung der im erfindungsgemäßen Verfahren einsetzbaren NCO-Verbindungen ebenfalls verwendbare Verbindungen sind organofunktionelle Polysiloxane, die zwei endständige, gegenüber Isocyanatgruppen reaktionsfähige Gruppen und Struktureinheiten der Formel $-O-Si-(R)_2$-aufweisen, wobei in dieser Formel R für einen $C_1$-$C_4$-Alkyl- oder einen Phenylrest, vorzugsweise jedoch für einen Methylrest, steht. Erfindungsgemäß eignen sich als Ausgangsmaterialien sowohl die an sich bekannten, endständige organofunktionelle Gruppen aufweisenden reinen Polysiloxane als auch die an sich bekannten endständig organofunktionellen Siloxanpolyoxyalkylencopolymeren. Erfindungsgemäß als Ausgangsmaterial geeignete organofunktionelle Polysiloxane sind beispielsweise in den DE-B 1 114 632, 1 190 176, 1 248 287, 2 543 638 oder in den DE-A 2 356 692, 2 445 648, 2 363 452, 2 427 273 oder 2 558 523 beschrieben. Die carbofunktionellen Endgruppen stellen vorzugsweise aliphatische, gegebenenfalls Heteroatome wie insbesondere Sauerstoff enthaltende Kohlenwasserstoffreste mit 1 bis 6 Kohlenstoffatomen dar, die mindestens eine Hydroxyl-, Mercapto- oder primäre bzw. sekundäre Aminogruppe aufweisen. Zu den bevorzugten carbofunktionellen Gruppen gehören primäre und sekundäre Hydroxylgruppen, sowie primäre und sekundäre Aminogruppen. Besonders bevorzugt sind solche Ausgangsverbindungen, die endständig primäre Hydroxylgruppen aufweisen. Die carbofunktionellen Gruppen können in den Ausgangsmaterialien beispielsweise in Form folgender carbofunktioneller Reste vorliegen:

$-CH_2OH$, $-(CH_2)_4OH$, $-CH_2-O-CH_2-CH_2-OH$, $-CH_2-S-CH_2-CH_2-OH$, $-CH_2-S-CH_2-CHOH-CH_2OH$, $-CH_2SH$, $-CH_2-S-CH_2-CH_2-SH$, $-CH_2-NH_2$, $-(CH_2)_4NH_2$, $-CH_2-NH-C_4H_9$ oder $-CH_2-NH-C_6H_{11}$.

Die organofunktionellen Polysiloxane weisen mindestens 2, vorzugsweise 6 bis 30, Struktureinheiten der Formel $-O-Si(R)_2-$ bei einem Molekulargewicht von 194 bis 12 000, besonders bevorzugt zwischen 400 und 3 000, auf. Wie bereits dargelegt, können in den erfindungsgemäß geeigneten Polysiloxanen in der Kette neben den genannten Struktureinheiten auch Polyoxyalkylen-, insbesondere Polyoxyethylen- und/oder Polyoxypropyleneinheiten vorliegen. Die organofunktionellen Polysiloxane sind nach bekannten Verfahren zugänglich. Beispielsweise können die besonders geeigneten Hydroxymethylpolysiloxane durch direkte Umsetzung von Brommethylpolysiloxanen mit alkoholischer Kalilauge dargestellt werden. 4-Aminobutylpolysiloxane werden über die Hydrierung der leicht zugänglichen Nitrile hergestellt, Aminomethylsiloxane werden durch Aminierung der Halogenmethylsiliciumverbindungen mit Ammoniak oder primären Aminen gewonnen.

In vielen Fällen werden die funktionellen Gruppen zunächst an niedermolekularen Siloxanen eingeführt; die so gewonnenen Produkte werden dann durch die bekannte Äquilibrierungsreaktion in höhermolekulare Polysiloxane übergeführt.

Geeignete organofunktionelle Polysiloxane sind beispielsweise Verbindungen der Formel

$$H-X-Y-(Si(R)_2-O)-_nSi(R)_2-Y-X-H$$

in welcher

R die bereits obengenannte Bedeutung hat,

X für —O—, —R'— (R' = aliphatischer oder cycloaliphatischer Kohlenwasserstoffrest mit bis zu 6 Kohlenstoffatomen), -S- steht,

Y für einen Alkylenrest mit 2 bis 4 Kohlenstoffatomen oder für einen durch Entfernung eines endständigen Sauerstoffatoms erhaltenen Oxyalkylen- bzw. Polyoxyalkylenrest (Alkylen = Ethylen und/oder Propylen) mit bis zu 50 Oxyalkylen-Einheiten steht und

n eine ganze Zahl zwischen 1 und 100, vorzugsweise 5 bis 29, bedeutet.

Erfindungsgemäß besonders gut geeignete organofunktionelle Polysiloxane sind beispielsweise folgende Verbindungen :

$HO—CH_2—Si(CH_3)_2—O[Si(CH_3)_2—O]_{12}—Si(CH_3)_2—CH_2OH$

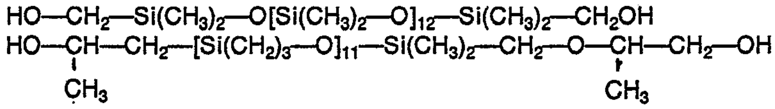

$HO—CH_2—Si(CH_3)_2—O—Si(CH_3)_2—CH_2—OH$

$HO—CH_2—Si(CH_3)_2—O—[Si(CH_3)_2—O]_{60}—Si(CH_3)_2—CH_2—OH$ oder

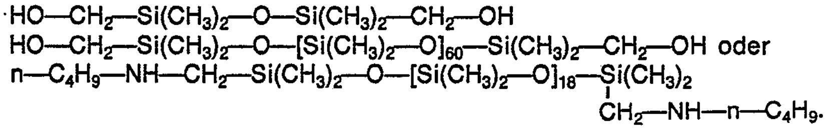

Die erfindungsgemäß besonders bevorzugten Organopolysiloxane entsprechen der allgemeinen Formel

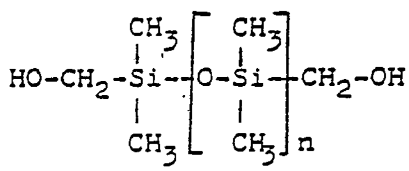

n = 5 bis 29

Sie werden in an sich bekannter Weise durch Äquilibrierung von 1,1,3,3-Tetramethyl-1,3-hydroxymethyldisiloxan der Formel

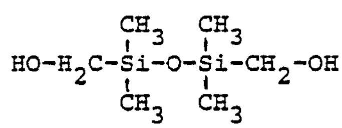

mit Octamethylcyclotetrasiloxan in Gegenwart von Schwefelsäure bzw. nach dem Verfahren der DE-B-1 236 505 hergestellt.

Die freie Isocyanatgruppen aufweisenden NCO-Prepolymeren werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer als 1, soll in der Regel zwischen 1,5 : 1 und 2,8 : 1 liegen. Selbstverständlich ist es möglich, einen noch größeren Überschuß an Polyisocyanat zu verwenden. Die Voraddukte haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte Voraddukte, während NCO/OH-Verhältnisse von unter 2 eine Erhöhung des mittleren Molekulargewichts der Voraddukte zur Folge haben. Es ist, wie schon erläutert, auch möglich, niedermolekulare Polyole als Kettenverlängerungsmittel bei der Herstellung der Prepolymere anteilmäßig neben höhermolekularen Ausgangsverbindungen mitzuverwenden ; in diesem Fall erhält man ebenfalls höhermolekulare Voraddukte.

Sollen im erfindungsgemäßen Produkte mit einer sehr geringen, bzw. praktisch ohne Gehalt an monomeren Polyaminen erhalten werden, so müssen die so erhaltenen NCO-Prepolymere noch einer Destillation unterworfen werden, bei der monomere Polyisocyanate entfernt werden. Dies kann z. B. vorteilhaft unter Verwendung eines Dünnschichtverdampfers geschehen.

Für das erfindungsgemäße Verfahren werden Prepolymere bevorzugt, die aus höhermolekularen Polyetherglykolen, gegebenenfalls unter Mitverwendung von Kettenverlängerern der oben beschriebenen Art, und aliphatischen und/oder aromatischen Diisocyanaten im Äquivalentverhältnis von 1 : 1,5 bis 1 : 2,8, insbesondere ca. 1 : 1,5 bis 1 : 2, erhalten worden sind.

Der NCO-Gehalt der eingesetzten NCO-Prepolymere beträgt 0,5 % bis 30 Gew.-%, bevorzugt 1,2 Gew.-% bis 25 Gew.-%, besonders bevorzugt 1,9 Gew.-% bis 15 Gew.-%.

Im erfindungsgemäßen Verfahren können jedoch auch sogenannte « Semi-Prepolymere », d. h. Mischungen von NCO-Prepolymeren mit weiteren freien Polyisocyanaten, eingesetzt werden, die einen u. U. noch höheren Gehalt, z. B. bis 40 Gew.-% NCO, aufweisen können. Aus praktisch wirtschaftlichen Gründen ist dies jedoch in den meisten Fällen nicht praktikabel, außerdem können die aus den

monomeren Polyisocyanaten entstandenen monomeren Amine bei einer Reihe von Anwendungen stören.

Die freie NCO-Gruppen aufweisenden Verbindungen in Form ihrer (zumeist urethangruppenfreien) modifizierten Isocyanate bzw. in Form ihrer (urethangruppenhaltigen) NCO-Prepolymeren bzw. ihre « Semi-Prepolymeren » besitzen insgesamt einen Gehalt an NCO-Gruppen innerhalb von 0,5 bis 40 Gew.-%, bevorzugt 1,2 bis 25 Gew.-% und besonders bevorzugt von 1,5 bis 15 Gew.-% NCO.

Es ist natürlich möglich, den freie NCO-Gruppen aufweisenden Verbindungen monomere, unmodifizierte Polyisocyanate zusätzlich zuzumischen, wodurch sich der NCO-Gehalt natürlich weiter erhöhen läßt, doch ist dies kein bevorzugtes Verfahren, da die den monomeren Polyisocyanaten zugrundeliegenden Polyamine ja direkt nach üblichen Methoden erhalten werden. Der Umweg über Isocyanate wäre in diesen Fällen praktisch sinnlos. Nach dem erfindungsgemäßen Verfahren werden jedoch solche modifizierten Polyamine wirtschaftlich und einfach zugänglich, die sich nach üblichen Synthesemethoden nicht oder nur viel zu kompliziert herstellen lassen, z. B. Cyanurat-triamine oder Biuret-polyamine.

Mittels des erfindungsgemäßen Verfahrens werden aus den freie NCO-Gruppen aufweisenden Verbindungen durch die NCO-Hydrolysereaktion aromatische und/oder aliphatische primäre Aminogruppen aufweisende Polyamine zugänglich. Diese Polyamine weisen entsprechend Urethan- und/oder Harnstoff- und/oder Uretdion- und/oder Cyanurat- und/oder Biuretgruppen, sowie gegebenenfalls Ether- und/oder Acetal- und/oder Carbonat- und/oder Thioether- und/oder Dialkylsiloxangruppen und/oder die Reste von Polybutadienen auf, wie diese in den NCO-Verbindungen vorgelegen haben. Durch Nebenreaktionen können jedoch auch zusätzliche Bindungen entstehen, z. B. Harnstoffgruppen aus bereits verseiften Anteilen und frischen NCO-Verbindungen während der Hydrolysereaktion. Dies kann z. B. bei aliphatischen NCO-Verbindungen als Nebenreaktion eintreten.

Die Menge der in den Polyaminen (maximal) enthaltenen $NH_2$-Gruppen entspricht der Menge der NCO-Gruppen in den NCO-Verbindungen, also etwa 0,19 bis 20,2 Gew.-% $NH_2$, bevorzugt 0,47 bis 13,1 Gew.-% $NH_2$ und besonders bevorzugt 0,57 bis 6,13 Gew.-% $NH_2$.

Die Herstellung aromatischer Polyamine aus aromatischen NCO-Verbindungen nach dem erfindungsgemäßen Verfahren ist bevorzugt.

Im erfindungsgemäßen Verfahren wird die NCO-Verbindung als Startkomponente in der Regel ohne Lösungsmittel verwendet. Es können jedoch z. B. zur Viskositätserniedrigung auch Lösungen von NCO-Verbindungen, besonders NCO-Prepolymeren, in NCO-inerten Lösungsmitteln verwendet werden, die vorzugsweise auch wassermischbar sind. Geeignete Lösungsmittel in diesem Sinne sind z. B. Dimethoxyethan, Diethylenglykoldimethylether, Dioxan oder Tetrahydrofuran ; weniger geeignete Lösungsmittel in diesem Sinne sind z. B. Kohlenwasserstoffe, chlorierte Kohlenwasserstoffe, sowie niedere Aromaten, chlorierte und/oder nitrierte Aromaten. Bevorzugt werden die NCO-Verbindungen jedoch dann als Lösungen in den o.g. Lösungsmitteln verwendet, wenn es sich um feste oder im Bereich von 20 bis 80 °C unschmelzbare, schwer schmelzbare oder zähflüssige NCO-Prepolymere handelt. Werden flüssige NCO-Verbindungen ohne Lösungsmittel im erfindungsgemäßen Verfahren eingesetzt, haben sie vorteilhafterweise eine Temperatur von 20 bis 80 °C, bevorzugt von 40 bis 70 °C, um ihre Viskosität niedrig zu halten.

Werden die NCO-Verbindungen in gelöster Form eingesetzt,so beträgt die bevorzugte Temperatur 20 bis 40 °C, höchstens jedoch die dem Siedepunkt des betreffenden Lösungsmittels entsprechende Temperatur.

Werden die NCO-Verbindungen als Lösungen verwendet, so können z. B. auf 100 Teile Lösungsmittel 1 bis 400 Teile NCO-Prepolymer eingesetzt werden.

Die Vermischung von NCO-Verbindungen und dem basischen Medium soll vorzugsweise zu einer möglichst niedrigen Temperatur der vermischten Reaktionslösung führen, um Nebenreaktionen möglichst auszuschließen. Die Temperatur in der Reaktionsmischung der Komponenten sollte möglichst unter 100 °C, besser unterhalb von 70 °C, vorzugsweise jedoch unterhalb von 40 °C liegen.

Es wird daher vorzugsweise die Temperatur des basischen, niederviskosen Mediums bereits vor der Umsetzung möglichst tief gewählt, z. B. – 25 bis + 40 °C, bevorzugt 0 bis 25 °C. Zusätzlich kann während der Reaktion weiter gekühlt werden, um die Reaktionstemperatur möglichst im optimalen Bereich zu halten. Die zulässigen Reaktionstemperaturen hängen jedoch auch von der Art der Vermischung und Reaktionsführung ab.

Als erfindungsgemäßes Medium wird im vorliegenden Verfahren im allgemeinen eine wäßrige Mischung oder Lösung von Basen verwendet. Die minimale Menge an Wasser beträgt dabei die stöchiometrisch notwendige Menge von 1 Mol Wasser pro 1 Mol NCO.

Geeignete Basen sind z. B. Alkalihydroxide, Erdalkalihydroxide und Calciumoxid, niedermolekulare Alkalisilikate und -aluminate, und Tetraalkylammoniumhydroxide. Besonders bevorzugt sind Natrium- und Kaliumhydroxid. Es können als Basenkonzentration z. B. 1 Teil auf Base auf 1 bis 100 Teile Wasser verwendet werden.

Möglich, aber weniger bevorzugt ist die Verwendung von weiteren organischen Lösungsmitteln, die vorzugsweise mit Wasser mischbar sind, z. B. Dioxan, Tetrahydrofuran und Dimethoxyethan. Beispielsweise können auf 100 Teile Wasser 10 bis 1 000 Teile Cosolvens mitverwendet werden.

Die Reaktion der NCO-Verbindungen mit den Basen kann nach verschiedenen Ausführungsformen durchgeführt werden.

In einer diskontinuierlichen Ausführungsform wird die NCO-Gruppen aufweisende Verbindung

langsam in das basische Medium eingeführt. Dies kann mittels eines Tropftrichters oder durch z. B. maschinelle Einspritzung mit einer Düse geschehen, wobei durch intensives Rühren eine möglichst gute Verteilung angestrebt wird. Die Dauer der Einführung der NCO-Verbindungen richtet sich nach der Wärmetönung der Reaktion, wobei durch Kühlung dafür Sorge getragen werden muß, daß die Temperatur der Vorlage im allgemeinen nicht die oben angeführten Temperaturschranken, im diskontinuierlichen Fall etwa 40 °C, vorzugsweise 20 °C, übersteigt. Dies ist besonders wichtig im Falle von z. B. tri- und höherfunktionellen NCO-Prepolymeren, während im Falle eines difunktionellen Prepolymers ein kurzzeitiges Ansteigen der Temperatur auf ca. 60 bis 70 °C tolerierbar ist. Im allgemeinen beträgt die Einführdauer ca. 5 bis 140 Minuten, bevorzugt 30 bis 120 Minuten.

Üblicherweise beträgt das Verhältnis der vorgelegten und einzuführenden Flüssigkeitsvolumina etwa 1 : 1 bis 1 : 3, dies gilt natürlich nicht, wenn, was möglich, aber nicht bevorzugt ist, feste NCO-Prepolymere in fester, möglichst feindisperser Form zugegeben werden.

In einer kontinuierlichen Ausführungsform, die für eine großtechnische Produktion besonders geeignet ist, werden NCO-Verbindungen (gegebenenfalls als Lösung) und die wäßrige Base getrennt einem gemeinsamen Reaktionsraum zudosiert, z. B. mittels eines Durchflußmischers intensiv vermischt und so zur Reaktion gebracht und aus dem Mischraum schnell ausgetragen. Die Dosierung der Komponenten kann z. B. über graduierte Tropftrichter oder mittels einer Kolben- und/oder Membran-Dosierpumpe oder einer anderen maschinellen Dosiervorrichtung vorgenommen werden. Es ist bei der kontinuierlichen Dosierung bevorzugt, beide Komponenten in sehr kurzer Zeit (Sekunden oder Bruchteilen davon) mit einer geeigneten, gegebenenfalls maschinell betriebenen Vorrichtung zu vermischen, zur Reaktion zu bringen und aus dem Reaktionsraum auszutragen.

Bei den geeigneten Durchflußmischern unterscheidet man zwischen den statischen Mischern mit festen Einbauten und dynamischen Mischern mit beweglichen Einbauten nach dem Rotor/Stator-Prinzip. Sie können gegebenenfalls geheizt oder gekühlt werden.

Die erforderliche Mischenergie wird bei den statischen Mischern über die Pumpen aufgebracht, während bei den dynamischen Mischern ein separater Motor den Rotor antreibt.

In allen Fällen hängt der Reaktionsumsatz der Isocyanatgruppen auch von der aufgebrachten Leistung bzw. den entsprechend erzeugten Scherkräften, d. h. von der feinen Dispergierung der NCO-Verbindung im basischen Medium, ab.

Die statischen Mischer lassen sich unterteilen in

a) Mischer mit einfachen Einbauten (z. B. Wendel beim Static Mixer® der Firma Kenics Corp./USA) ;

b) Mehrkanal-Mischer (z. B. AMK-Ross-ISG-Mischer der Aachener Misch- und Knetmaschinen-Fabrik/Bundesrepublik Deutschland ;

c) sogenannte Packungsmischer, wie z. B. der statische Mischer der Fa. Sulzer AG (Winterthur/Schweiz) und der BMK-Mischer der Bayer AG/Bundesrepublik Deutschland ;

d) als weitere Variante der statischen Mischer können Mischdüsen, z. B. die der Fa. Lechler (Stuttgart/Bundesrepublik Deutschland) oder die Mischkammern in den HK-Maschinen der Fa. Hennecke (Birlinghofen/Bundesrepublik Deutschland) in die die Ausgangsprodukte unter hohem Druck eingedüst werden (Gegenstrominjektion), angesehen werden. Ähnlich arbeitet auch der Intermixer® der Fa. Sonic (Connecticut/USA), bei dem das zu dispergierende Material auf eine bewegliche Zunge gedüst wird, die dadurch in Schwingungen (ca. 500 Hz) gerät und so das durchfließende Produkt intensiv dispergiert bzw. mischt.

Als dynamische Mischer kommen für das erfindungsgemäß Verfahren beispielsweise die Durchflußmischer der Firmen Ekato RMT (Schopfheim/Bundesrepublik Deutschland), Lightnin (Neu-Isenburg/Bundesrepublik Deutschland) und Hennecke (Stachelrührer) in Betracht, die ebenso wie die bekannten Kreiselhomogeniermaschinen, z. B. Supraton® der Fa. Supraton Auer & Zucker OHG (Norf/Bundesrepublik Deutschland) oder Dispax-Reaktor® der Fa. Janke & Kunkel KG (Staufen/Bundesrepublik Deutschland) nach dem Stator-Rotor-Prinzip arbeiten, dabei jedoch nicht als Förderorgane benutzt werden können. Die aufzubringende Dispergierleistung beträgt je nach gewünschter Dispergiergrad, verwendetem Mischertyp und Viskosität der Ausgangsstoffe etwa 1 bis über 10 kW/1 Mischerinhalt.

Im allgemeinen werden die Reaktionskomponenten bei etwa − 25 bis 40 °C dem Durchflußmischer zugeführt. Infolge der Scherkräfte beim Einsatz eines bevorzugt eingesetzten dynamischen Mischers und in Abhängigkeit von der entstehenden Rekationswärme steigen die Reaktionstemperaturen auf über 50 °C an. Im allgemeinen ist es jedoch zweckmäßig, die Temperatur (gegebenenfalls durch Kühlung des Mischaggregats) unter 100 °C, vorzugsweise unter 70 °C, zu halten.

Werden weitere Co-Lösungsmittel verwendet, so muß die Temperatur unter deren Siedepunkt gehalten werden, wenn er niedriger als der von Wasser ist.

Die Reaktionskomponenten werden in möglichst dünnviskoser Form und bei jeweils möglichst niedriger Temperatur der Dosierkomponenten dem Durchflußmischer zugeführt. Dabei können die Einzelkomponenten, wie bereits erwähnt, auf die angegebenen Temperaturen erwärmt bzw. gekühlt werden. Infolge der hohen Scherkräfte beim Einsatz von dynamischen Mischern und in Abhängigkeit von der entstehenden Reaktionswärme können die Temperaturen im Mischraum deutlich ansteigen. Im allgemeinen ist es jedoch zweckmäßig, die Temperatur (gegebenenfalls zur Kühlung des Mischaggregats) unter 100 °C zu halten, vorzugsweise unterhalb 60 °C und besonders bevorzugt zwischen 20 und 40 °C. Wegen der hohen Durchmischung, schnellen Reaktion und Austragung des gebildeten Reaktionsgemisches ist die Temperatur nicht ganz so kritisch wie im diskontinuierlichen Verfahren. Werden weitere Co-Lösungsmittel verwendet, so muß die Temperatur zweckmäßig unter deren Siedepunkt gehalten werden. Die Mengen der als Basen vorzugsweise verwendeten Alkali-, Erdalkali- und organischen Tetraalkylammoniumhydroxide liegen zwischen 0,3 : 1 bis 2 : 1 Basenäquivalenten pro NCO-Äquivalent. Bei kontinuierlicher Reaktion können auch Lösungsmittel wie Isopropanol oder t.-Butanol verwendet werden.

Wenn ein Produkt ohne oder mit nur geringfügiger Vorverlängerung über Harnstoffgruppen erhalten werden soll, so wird das $OH^{\ominus}$/NCO-Verhältnis von 2 : 1 bis 1,01 : 1 besonders 1,8 : 1 bis 1,1 : 1, bevorzugt, d. h. nach vollständiger Reaktion aller NCO-Gruppen verbleibt noch ein Überschuß an Base.

Es können jedoch auch geringere Mengen an Basen verwendet werden. Dies ist dann der Fall, wenn über Harnstoffgruppen erfolgte Vorverlängerung der Polyamine nicht stört bzw. sogar erwünscht ist, was für manche Anwendungszwecke der Fall sein kann. Ein Verhältnis von 0,3 : 1 bis 1,0 : 1,0, bevorzugt 0,6 : 1 bis 1,0 : 1,0, erlaubt eine einwandfreie Durchführung der Reaktion.

Selbstverständlich lassen sich auch noch höhere bzw. niedrigere $OH^{\ominus}$/NCO-Verhältnisse verwenden. Bei einem Verhältnis von kleiner 0,3 : 1 wird jedoch wegen des hochpolymeren Charakters des Produkts die Aufarbeitung sehr langwierig, während ein $OH^{\ominus}$ : NCO-Verhältnis von größer 2 : 1 zwar möglich ist, aber keine Vorteile bringt.

Zur Erleichterung der Reaktion der Isocyanatgruppen mit der wäßrigen Base können verschiedene Zusätze verwendet werden. So können zum Homogenisieren ein oder mehrere handelsübliche Emulgatoren zugesetzt werden, z. B. in Mengen von 0,01 bis 1 Gew.-Teil auf 100 Teile Reaktionsmischung.

Weiterhin ist es möglich, zur Erhöhung der Reaktionsgeschwindigkeit weitere katalytisch wirkende Verbindungen zuzugeben, wie sie in der PU-Chemie allgemein bekannt sind und bei der Herstellung von Polyurethanschaumstoff zur Beschleunigung der NCO-Wasser-Reaktion eingesetzt werden, z. B.Metallsalze.

Nach der vollständigen Umwandlung aller NCO-Gruppen ist es gegebenenfalls möglich, aber im allgemeinen nicht nötig und auch weniger bevorzugt, vor der weiteren Behandlung Wasser oder ein organisches, mit Wasser mischbares Lösungsmittel hinzuzufügen. Geeignete Lösungsmittel solcher Art sind niedere Alkohole wie Methanol, Ethanol, Isopropanol, Ether wie Tetrahydrofuran, Dioxan, Dimethoxyethan oder Diethylenglykoldimethylether.

Die durch das Vermischen der NCO-Verbindungen mit dem basischen Medium erhaltenen, Carbamatgruppen enthaltenden Verbindungen werden erfindungsgemäß direkt in Aminogruppen enthaltende Verbindungen dadurch umgewandelt, daß die Carbamatgruppen aufweisende Verbindungen enthaltende Reaktionsmischung zur Gewinnung des Amins entweder thermisch behandelt (Verfahren a)) oder mit einem Lösungsmittel extrahiert wird (Verfahren b)). Verfahren a) und b) können kontinuierlich als auch diskontinuierlich durchgeführt werden. Ebenso ist bei beiden Verfahrensvarianten, insbesondere jedoch bei a), günstig, Vakuum anzulegen, wordurch die Zerlegung der Carbamatgruppen aufweisenden Verbindungen begünstigt wird. Beide Verfahren können auch kombiniert werden.

Verfahren a) : (thermische Behandlung)

Durch thermische Behandlung bis 200 °C erfolgt die Hydrolyse der Carbamatgruppen in Aminogruppen und Salze der Kohlensäure, wobei aus den Carbamatgruppen aufweisenden Verbindungen entsprechende Polyamine entstehen. Die thermische Behandlung kann kontinuierlich und diskontinuierlich durchgeführt werden. Sie kann ohne (a/1) bzw. mit Anlegen von Vakuum (a/2) erfolgen.

In einer diskontinuierlichen Ausführungsform des erfindungsgemäßen Verfahrens, das bevorzugt im gleichen Reaktionsgefäß und im direkten Anschluß an die Herstellung der Carbamatgruppen aufweisenden Verbindungen durchgeführt wird, wird das Carbamatgruppen aufweisende Verbindungen enthaltende Reaktionsgemisch bis 360 Minuten, bevorzugt 5 bis 180 Minuten, besonders bevorzugt 30 bis 120 Minuten, mit einer 60 bis 200 °C, bevorzugt 100 bis 160 °C, heißen Wärmequelle (z. B. Dampf oder Ölbad, sowie überleiten auf beheizte Platten) auf $\geqslant$ 40 °C, bevorzugt $\geqslant$ 60 °C, besonders bevorzugt $\geqslant$ 80 °C und maximal etwa 200 °C erhitzt. Besonders günstig ist der Bereich von etwa 60 bis 100 °C, bevorzugt 80 bis 100 °C, wie er sich beim Rückflußkochen überschüssigen Wassers und evtl. vorhandenen Lösungsmittels (gegebenenfalls unter Anlegen von Vakuum, einstellt. Bei dieser Wärmebehandlung kann, vor allem gegen Ende der Wärmebehandlung, etwas Kohlendioxid entweichen.

Bei dieser Wärmebehandlung entstehen Kohlensäuresalze, wie gegebenenfalls verschieden hydratisierte Carbonate und Hydrogencarbonate der eingesetzten Basen. Zum Beispiel kann Kaliumcarbonat, $K_2CO_3$, entstehen.

Besteht der Lösungsmittelanteil der der Wärmebehandlung unterworfenen, carbamathaltigen Reaktionsmischung aus Wasser oder zu einem überwiegenden Anteil aus Wasser und zu einem kleineren Anteil aus einem organischen Lösungsmittel oder zu einem geringeren Anteil aus Wasser und zu einem geringeren Anteil aus Wasser und zu einem größeren Anteil aus einem protischen oder aprotischen dipolaren Solvens (z. B. Methanol, Dimethylformamid) mit großem Salzlösevermögen, so bleibt das Kohlensäuresalz weitgehend in Lösung.

Besteht der Lösungsmittelanteil der der Wärmebehandlung unterworfenen carbamatgruppenhaltigen Reaktionsmischung aus einem geringeren Anteil Wasser und einem größeren Anteil eines

Lösungsmittel mit geringerem Salzlösevermögen (z. B. n-Butanol, i-Butanol, Tetrahydrofuran) so können die Kohlensäuresalze zu einem Teil bereits ausfallen und abfiltriert werden.

Im Anschluß an die Wärmebehandlung wird das Lösungsmittel abdestilliert. Dies kann bei Normaldruck oder bei einem Vakuum von z. B. 0,2 bis 950 mbar vorgenommen werden. Die Innentemperatur richtet sich nach den Siedepunkten und den Mischungsverhältnissen der verwendeten Lösungsmittel, sie beträgt vorzugsweise 80 bis 100 °C. Es ist zweckmäßig, bei nur noch geringen Resten flüchtiger Stoffe die Temperatur unter 100 °C zu senken und Vakuum anzulegen, z. B. 0,01 bis 6 mbar.

Es ist möglich, Reste von Wasser durch Zusatz eines mit Wasser ein Azeotrop bildenden Lösungsmittels (z. B. Toluol) und erneute Destillation unter gegebenenfalls erniedrigtem Druck zu entfernen. Von dem 20 °C oder wärmeren, bevorzugt 60 bis 90 °C warmen, flüssigen Polyamin-haltigen Destillationsrückstand wird das Kohlensäuresalz z. B. durch Filtration, Zentrifugieren, Abdekantieren oder ähnliche Maßnahmen abgetrennt. Vorzugsweise erfolgt die Abtrennung mit einer gegebenenfalls beheizbaren Drucknutsche bei z. B. etwa 0,5 bis 4 bar Überdruck.

Wenn gewünscht kann der Filterrückstand, gegebenenfalls nach Vereinigung mit weiteren Filterrückständen gleicher Art, mit einem geeigneten Lösungsmittel, welches das Amin löst und das Kohlensäuresalz nicht löst, zur Gewinnung geringer Restmengen an Aminprodukt extrahiert werden. Geeignete Lösungsmittel sind etwa die halogenierten, insbesondere chlorierten Alkane wie z. B. Trichlormethan und flüssige aromatische Kohlenwasserstoffe wie z. B. Toluol.

Die diskontinuierliche Ausführungsform des erfindungsgemäßen Verfahrens a) kann auch in verschieden modifizierter Weise durchgeführt werden.

So ist es möglich und auch bevorzugt, obige Wärmebehandlung der Carbamatzerlegung unter Bedingungen durchzuführen, bei denen Wasser und etwaige weitere Lösungsmittel abdestillieren. Das carbamathaltige Reaktionsgemisch wird etwa 30 bis 480 Minuten mit einer 60 bis 200 °C, bevorzugt 100 bis 160 °C heißen Wärmequelle auf größer = 40 °C, bevorzugt größer = 60 °C und besonders größer = 80 °C erhitzt, so daß das Lösungsmittel während der thermischen Behandlung abdestilliert. Diese gleichzeitige Wärmebehandlung und Destillation kann gegebenenfalls auch unter vermindertem Druck, z. B. bei 200 bis 950 mbar, vorgenommen werden (Verfahrens-art a/2). Dabei kann so verfahren werden, daß die Druckminderung allmählich und kontinuierlich erfolgt. So kann die Destillation bei Normaldruck begonnen und bei etwa 0,5 mbar beendet werden.

Eine weitere Modifikation besteht darin, daß vor der Trennung Polyamin/Kohlensäuresalz ein Lösungsmittel zugegeben wird. Dies kann dann angebracht sein, wenn die Viskosität des abzusaugenden Gemischs zu hoch ist, wenn die ausgefallene Kohlensäuresalze zu feinkristallin sind und wenn die Kohlensäuresalzfällung unvollständig ist. Geeignete Lösungsmittel sind z. B. Ether wie Dioxan, niedere Alkane wie Pentan, Hexan, Chlorkohlenwasserstoffe wie Dichlormethan, Trichlorethan, niedere Aromaten wie Toluol und Xylole. Nach der z. B. filtrativen Trennung von Salz und Amin wird das verwendete Lösungsmittel aus der Aminlösung abdestilliert. Vorteilhafterweise wird ein Lösungsmittel verwendet, das etwaiges restliches Wasser azeotrop zu entfernen vermag, z. B. Toluol.

Eine weitere Modifikation (a/3) besteht darin, daß vor oder während der thermischen Behandlung der Carbamatgruppen Verbindungen aufweisenden Reaktionsmischung unterschüssige Mengen an Säure, bezogen auf eingesetzte Basenäquivalente, z. B. 0,01 bis 0,99 äquivalente Säure, bezogen auf 1 Äquivalent an zugesetzten basischen Verbindungen, mit dieser Reaktionsmischung vermischt werden. Geeignete Säuren sind z. B. Schwefelsäure, Salzsäure, Phosphorsäure und andere, unter den Reaktionsbedingungen nicht oxidierende Säuren, ferner starke organische Säuren wie z. B. Ameisensäure, Chloressigsäure oder Essigsäure oder andere Säuren, vorzugsweise mit einer Säurestärke die mindestens der von Essigsäure entspricht.

Nach dem Abdestillieren des Lösungsmittels wird ein Gemisch aus Kohlensäuresalz und z. B. dem Sulfat, $HSO_4^-$, Chlorid, Phosphat etc. abfiltriert. Selbstverständlich können auch hier Temperaturen und Druck in den oben angegebenen Grenzen variiert werden und es kann vor der Abtrennung ein geeignetes Lösungsmittel zugegeben werden.

Bevorzugt kann vor oder zu Beginn der thermischen Behandlung Kohlendioxid eingeleitet werden. Dies empfiehlt sich besonders dann, wenn ein $OH^{\ominus}$/NCO-Verhältnis von $\geq 1$ Verwendung gefunden hat. Überschüssige Base wird dabei in ein Salz der Kohlensäure umgewandelt. Sonst wird wie oben angegeben vorgegangen.

In einer weiteren Modifikation a/4 kann, bevorzugt vor der Thermobehandlung, eine Verbindung zugegeben werden, die mit Basen in einem weitgehend wasserfreien Medium schwerlösliche Salze ergibt. Diese Methode kann bei der Herstellung von Verfahrensprodukten, welche Löslichkeit für gegebenenfalls wasserhaltige Salze der Kohlensäure aufweisen und die nur geringe Löslichkeit in den Lösungsmitteln haben, von Vorteil sein. Als geeignete Verbindungen, die mit Basen Salze ergeben, sind Carbonsäureester bevorzugt, z. B. Methyl- oder Ethylester der Ameisen-, Essig-, Propion- oder Benzoesäure. Sie werden vorzugsweise in solchen Mengen eingesetzt, daß alle Hydroxidionen eine reaktionsbereite Verbindung, wie z. B. eine Estergruppen tragende Verbindung, treffen ; ein kleiner Überschuß ist bevorzugt, doch kann auch ein größerer Überschuß verwendet werden. Die Bedingungen der Wärmebehandlung und die Aufarbeitung folgen den oben angeführten Wegen. Zusätzlich zu den Salzen der Kohlensäure werden hier z. B. (bei der Verwendung von Essigsäureestern) Acetate ausgefällt und bei der Aufarbeitung wird die Alkoholkomponente mit abdestilliert.

Eine kontinuierliche Verfahrensweise ist mit allen vorgenannten Behandlungsmethoden und ihren Modifikationen durchführbar. Vorzugsweise erfolgt eine kontinuierliche Gewinnung des Polyamins durch thermische Behandlung des Carbamatgruppen aufweisende Verbindungen enthaltenden Reaktionsgemischs im Anschluß an eine kontinuierlich vorgenommene Herstellung des besagten Reaktionsgemisches.

Die kontinuierliche Verfahrensweise besteht im Prinzip darin, daß das besagte Reaktionsgemisch, das gegebenenfalls durch Zusatz von Verdünnern fließfähig gemacht wird, über eine Heizstrecke geführt wird. Temperatur der Heizstrecke und ihre Dimensionierung bestimmen die notwendige Dauer der Wärmeeinwirkung. Die Temperatur der Heizstrecke wird so gewählt, daß eine, zumindest teilweise, bevorzugt vollständige Verdampfung der Lösungsmittel erfolgt. Dabei kann gegebenenfalls auch unter vermindertem Druck, z. B. 0,5 bis 950 mbar, bevorzugt 100 bis 800 mbar, gearbeitet werden. Die Temperatur der Heizstrecke liegt zwischen 60 und 200 °C, bevorzugt zwischen 100 und 160 °C. Sie kann an verschiedenen Punkten der Heizstrecke unterschiedlich sein, jedoch sollte eine Erwärmung des zu zerlegenden Carbamatgemisches auf über 200 °C möglichst nicht erfolgen. Eine einfache Ausführungsform einer solchen Heizstrecke ist z. B. ein Dünnschichtverdampfer.

Sofern die Heizstrecke nicht Filtereinrichtungen integriert oder andere Vorkehrungen zur Abtrennung der Salzanteile enthält, wird das resultierende Amin/Salz-Gemisch nach bekannten Methoden getrennt, wie sie bei der Beschreibung der diskontinuierlichen Arbeitsweise geschildert wurden.

Verfahren b) : (Extraktion mit Lösungsmitteln)

Die Carbamatgruppen aufweisenden Verbindungen lassen sich auch durch Behandlung des Carbamatgruppen aufweisende Verbindungen enthaltenden Reaktionsgemisches mit einem geeigneten Lösungsmittel in die entsprechenden Aminogruppen aufweisenden Verbindungen (erfindungsgemäß hergestellte Polyamine) umwandeln.

Für diese Verfahrensmethodik geeignete, mit Wasser nicht mischbare organische Lösungsmittel sind besonders solche Lösungsmittel, welche Nichtlöser für die Carbamatgruppen enthaltenden Verbindungen, sowie für die entstehenden kohlensauren Salze sind und andererseits gute Lösemittel für die entstehenden Amine darstellen. Solche Lösungsmittel sind z. B. Dichlormethan, Trichlormethan, Tetrachlormethan, Cyclohexan, Methylcyclohexan, Pentan, Hexan, Benzol und Toluol. Besonders geeignet ist Dichlormethan.

Auf 100 Teile Wasser in der Carbamatgruppen aufweisende Verbindungen enthaltenden Reaktionsmischung werden 10 bis 1 000 Teile des besagten Lösungsmittels, bevorzugt 20 bis 500, besonders bevorzugt 80 bis 150 Teile, verwendet. Die Behandlung wird bevorzugt bei 20 bis 40 °C durchgeführt, doch kann die Methode auch bei höherer Temperatur, aber höchstens bei der Temperatur, die der Siedetemperatur des verwendeten Lösungsmittels entspricht, durchgeführt werden. Die erforderliche Behandlungs- und Extraktionsdauer beträgt im allgemeinen bei Raumtemperatur etwa 1 Stunde bis 3 Tage, bevorzugt 2 Stunden bis 1 Tag, sie verkürzt sich bei erhöhter Behandlungstemperatur. Das Ende der Reaktion ist daran zu erkennen, daß die wäßrige und die organische Phase optisch klar sind und die organische Phase auf Säurezusatz (vorher wird zur Homogenisierung der Phasen z. B. Ethanol zugesetzt) nicht mehr aufschäumt. Zweckmäßig wird während der Behandlung gerührt. Nach beendeter Reaktion werden die beiden Phasen voneinander mechanisch getrennt und die organische Phase durch Destillation vom organischen Lösungsmittel befreit. Restliche Mengen flüchtiger Stoffe werden bei z. B. 0,1 mbar/100 °C entfernt.

Im Prinzip verwendbar sind jedoch auch wassermischbare Lösungsmittel, wen sie zumindest schlechtere Lösemittel für Salze der Kohlensäure sind als Wasser. Solche Lösemittel sind etwa Methanol, Ethanol, n-Propanol, i-Propanol, n-Butanol, i-Amylalkohol, cyclische Ether wie Dioxan oder Tetrahydrofuran, wasserlösliche acyclische Ether wie Diethylenglykoldimethylether oder Ketone wie Aceton, Methylethylketon und andere. Auch hier wird nach Umwandlung der Carbamatgruppen enthaltenden Verbindung in ein Polyamin ein Zweiphasensystem erhalten. Dabei ist in der wäßrigen Phase das Kohlensäuresalz und in der organischen Phase das Amin angereichert ; wegen der gegenseitigen Mischbarkeit befinden sich jedoch in der wäßrigen Phase Anteile des organischen Lösungsmittels und des Amins, während die organische Phase anteilsmäßig Salze und Wasser enthält, so daß die organische Phase nach Abdestillieren des Lösungsmittels noch einmal filtriert werden muß.

Es ist auch möglich, ein Gemisch mehrerer organischer Lösungsmittel zu verwenden. Bevorzugt werden die Lösungsmittel daher so ausgewählt, daß mindestens ein Lösungsmittel bevorzugt neben dem Amin auch die Carbamatgruppen aufweisende Verbindung löst, während das mindestens eine andere Lösungsmittel bevorzugt nur das Amin löst. Für das erste Lösungsmittel sind z. B. niedere Alkohole, für das zweite Lösungsmittel z. B. chlorierte aliphatische Kohlenwasserstoffe brauchbar.

Die Extraktion kann bei Normaldruck, bei vermindertem bzw. bei Überdruck vorgenommen werden, bevorzugt ist das Arbeiten bei Normaldruck.

Auch das Extraktionsverfahren kann dadurch modifiziert werden, daß vor oder während der Extraktion die Carbamatgruppen aufweisenden Verbindungen enthaltende Reaktionsmischung mit unterschüssigen Äquivalente an Säuren, bezogen auf die eingesetzte Basenmenge, das heißt etwa 0,01 bis 0,99 Äquivalente Säure pro 1 Äquivalent an Basen, vermischt werden. Besonders geeignet ist diese

Modifizierung immer dann, ebenso wie die Einleitung von Kohlendioxid, wenn ein $OH^{\ominus}$/NCO-Verhältnis von größer 1 : 1 Verwendung gefunden hat. Auch die üblichen Modifizierungen des Verfahrens a) können hier sinngemäß übernommen werden.

Für dieses diskontinuierlich auszuführende Extraktionsverfahren eignen sich laborübliche Vorrichtungen, z. B. Rühren des Gemischs mit den Extraktionslösungsmitteln in einem Kolben, bis optisch klare Phasen entstehen und anschließende Überführung und Separierung der Phasen in einem Scheidetrichter. Verwendbar sind aber auch übliche Extraktoren für flüssig/flüssig-Gemische, wie sie für die Verwendung von spezifisch schwereren oder leichteren Extraktionsmitteln im Vergleich mit dem Extraktionsgut, angeboten werden. Die Extraktion kann somit auch kontinuierlich durchgeführt werden. Verwendet man z. B. ein Lösungsmittel, das die Carbamatgruppen aufweisenden Verbindungen nicht löst, mit dem Polyamin eine spezifisch leichtere Phase bildet, so kann beispielsweise folgendermaßen vorgegangen werden :

Ein Gefäß wird kontinuierlich mit einem Carbamatgruppen enthaltenden Reaktionsgemisch beschickt. Unter Rühren wird ein wie oben definiertes Lösungsmittel von unten eingebracht, daß das freie Amin löst, über einen z. B. Überlauf aus dem Extraktor entfernt, durch Destillation von Amin befreit und wieder in den Extraktor eingrebracht. Die spezifisch schwerere, z. B. wäßrige Salzlösung, wird unten abgelassen und mit Natriumhydroxid versetzt und vom daraufhin kristallisierenden Kohlensäuresalz befreit und im Kreislauf wieder zur Umsetzung mit den NCO-Verbindungen eingesetzt.

Aus den organischen Aminlösungen kann das Amin sowohl nach der kontinuierlichen als auch diskontinuierlichen Verfahrensweise leicht durch gegebenenfalls unter vermindertem Druck ausgeführte Destillation der Lösungsmittel rein erhalten werden.

Dies ist in vielen Fällen jedoch nicht nötig, da für eine ganze Reihe von Anwendungszwecken, z. B. Herstellung von Beschichtungen von textilen Geweben, Leder und anderen Flächengebilden, Amine als Lösung in einem organischen Lösungsmittel verwendet werden. In solchen Fällen wird zweckmäßigerweise ein solches Lösungsmittel verwendet, wie es auch für die anwendungstechnischen Zwecke der angeschlossenen Verwendung zum Aufbau hochmolekularer Polyurethan (harnstoff) sinnvoll ist.

Die nach Entfernung der Lösungsmittel erfindungsgemäß erhaltenen Polyamine stellen im allgemeinen farblose bis schwach gefärbte, mittelviskose bis hochviskose und gegebenenfalls höherschmelzende Produkte dar.

Die erfindungsgemäß erhaltenen Polyamine werden wegen ihres niedrigen Dampfdrucks vorzugsweise als Reaktionspartner für gegebenenfalls blockierte Polyisocyanate bei der Herstellung von Polyurethanen (Polyurethanharnstoffen), gegebenenfalls zelligen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 903 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendenden Hilfs- und Zusatzstoffen. Die Herstellung von Polyurethan(harnstoff)en mittels der erfindungsgemäß hergestellten Polyamine ist ebenfalls Gegenstand der vorliegenden Erfindung. Ihre Anwendung kann z. B. für Elastomere, Beschichtungen, Fäden in der Applikation aus Schmelzen, Lösungen, Dispersionen oder als Reaktivkomponentenmischung erfolgen. Weitere Verwendungszwecke der erfindungsgemäß hergestellten Polyamine sind z. B. Kupplungskomponenten für Diazofarbstoffe, Härter für Epoxid und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## Herstellungsbeispiele

### Beispiel 1

1.1 Herstellung des Carbamats

Vorgelegt werden 306 g 50 %ige KOH-Lösung (2,73 Mol), 2,1 l Wasser und 2,3 g Mersolat ®H. Die Lösung wird mit einem Eisbad extern gekühlt. Innerhabl 90 Minuten werden 2,25 kg eines 60 °C warmen, aus 2,4-Toluylendiisocyanat und einem Polypropylenglykolether der durchschnittlichen Molmasse 2 000 hergestellten und einen NCO-Wert von 3,4 % aufweisenden NCO-Prepolymers zugegeben ($OH^{\ominus}$ : NCO = 1,5). Dabei wird eine Innentemperatur von 18 bis 22 °C aufrechterhalten und 20 Minuten bei dieser Temperatur nachgerührt.

1.2 Herstellung des Amins (Methode a/1 — thermische Zerlegung ohne Vakuum)

1 kg obiger Carbamatreaktionsmischung werden mit einem 150 °C heißen Bad zum Sieden erhitzt. Bei Erreichen der Siedetemperatur beginnt Gasentwicklung, die während des einstündigen Erhitzens 4,0 l Kohlendioxid erbringt. Danach wird bei 100 °C/27 mbar und 100 °C/0,7 mbar das Wasser abdestilliert

und das Kohlensäuresalz vom aminischen Endprodukt abfiltriert.

| Produktdaten : | |
|---|---|
| Ausbeute | 475 g (97,8 %) |
| NH-Zahl | 43,9, 44,2 (mgKOH/g) |
| Säurezahl | < 0,05 (mgKOH/g) |
| Molmasse | 2 700 |
| Viskosität η 75 | 422 mPa.s |
| Wassergehalt (Karl Fischer) | 0,09 % |
| Gesamt-Stickstoffgehalt (Kjieldal) | 2,46 % |
| prim. $NH_2$ : (Titration mit $HClO_4$) | 1,08 % |

Beispiel 2 (Method a/1)

In 1 kg des Carbamatreaktionsgemisches aus Beispiel 1.1. wird 30 Minuten in kräftigem Strom Kohlendioxid durchgeleitet. Danach wird 2 Stunden lang bei einer Badtemperatur von 150 °C gerührt, wobei die Gasabspaltung erst bei Erreichen der Siedetemperatur beginnt. Während des 2-stündigen Rückflußkochens werden 6, 12 l Kohlendioxid abgespalten. Danach wird bei 100 °C/20 mbar und anschließend 100 °C/0,13 mbar das Wasser abdestilliert und das Kohlensäuresalz vom aminischen Endprodukt abfiltriert.

| Produktdaten : | |
|---|---|
| Ausbeute | 484 g (100 %) |
| NH-Zahl | 44,3, 44,4 |
| Säurezahl | 0,2 |
| Molmasse | 2 600 |
| Viskosität η 75 | 420 mPa.s |
| Wassergehalt (Karl Fischer) | 0,08 % |
| Gesamt-Stickstoffgehalt (Kjieldal) | 2,46 % |
| primärer Stickstoff ($HClO_4$) | 1,08 %. |

Beispiel 3

3.1 Herstellung des Carbamats

Vorgelegt wird eine Lösung von 68 g 50 %iger KOH-Lösung, 470 ml Wasser und 0,5 g Mersolat H. Innerhalb 30 Minuten wird 0,5 kg eines 50 °C warmen NCO-Prepolymers zugetropft und 15 Minuten nachgerührt. Die Innentemperatur wurde bei 20 bis 22 °C gehalten. Das NCO-Prepolymer ist zusätzlich gedünnschichtet und weist einen NCO-Gehalt von 3,4 % auf. Es wird hergestellt durch Reaktion eines Überschusses von Toluylendiisocyanat mit einem 1 : 1-Gemisch aus einem auf Propylenglykol und einem auf Trimethylpropan gestarteten PO/EO-Mischpolyetherpolyol, das eine mittlere Funktionalität von 2,5 und eine durchschnittliche OH-Zahl von 56 aufweist.

3.2 Herstellung des Amins (Methode a/1)

Bei der wie bei 1.2 durchgeführten Herstellung des Amins wurden während des 90-minütigen Erhitzens eine Abspaltung von 5, 3 l Kohlendioxid gemessen.

| Produktdaten : | |
|---|---|
| Ausbeute | 476 g (97,5 %) |
| NH-Zahl | 48,7 %, 49,0 |
| Säurezahl | < 0,05 |
| Molmasse | 3 000 |
| Viskosität η 75 | 426 mPa.s |
| Wassergehalt (Karl Fischer) | 0,07 % |
| Gesamtstickstoffgehalt | 2,49 % |
| primärer Stickstoff | 1,18 % |

Beispiel 4

4.1 Herstellung des Carbamats

Vorgelegt wurden 242 g 45 % Natronlauge (2,72 Mol NaOH), 2, 1 l Wasser und 2,3 g Mersolat ®H. Innerhalb 90 Minuten werden 2,25 kg des selben NCO-Pre-polymers, das in Versuch 1.1. Verwendung fand, zugetropft. Die Innentemperatur wurde bei 18 °C gehalten, 30 Minuten wurde nachgerührt ($OH^{\ominus}$ : NCO = 1,5 : 1).

4.2 Herstellung des Amins (Methode a/1)

2 kg des obigen Carbamat-Reaktionsgemisches wird 1 Stunde auf 100 °C (150 °C Badtemperatur) unter Rühren erhitzt. Dabei entwickeln sich 6,45 l Kohlendioxid. Danach wird bei einer Badtemperatur von 100 °C und 33 mbar und später 1,33 mbar das Wasser abdestilliert. Das Reaktionsprodukt wird auf 60 °C abgekühlt und durch Filtration vom Kohlensäuresalz abgetrennt.

| Produktdaten : | |
|---|---|
| Ausbeute : | 875 g (91,5 %) |
| NH-Zahl | 42,9, 43,2 |
| Säurezahl | < 0,05 |
| Molmasse | 2 700 |
| Viskosität η 75 | 445 mPa.s |
| Gesamt-Stickstoffgehalt | 2,48 % |
| primärer Stickstoff | 1,05 % |
| Wasser (Karl Fischer) | 0,02 % |

Beispiel 5

5.1 Herstellung des Carbamats

Vorgelegt wird eine Lösung von 37,3 g Kaliumhydroxid (0,664 Mol) und 0,2 g Mersolat ® H in 850 ml Wasser. Sie wird mit einem Eisbad extern gekühlt. Unter Rühren wird innerhalb 70 Minuten 1 kg eines 50 °C warmen, aus 4,4'-Diisocyanatodiphenylmethan und einem auf Propylenglykol gestarteten Polyethylenoxid-polypropylenoxid-Mischpolyetherpolyols der durchschnittlichen Molmasse 4 000 hergestellten und einen NCO-Wert von 1,86 % aufweisenden NCO-Prepolymers zugegeben ($OH^{\ominus}$ : NCO = 1,5). Dabei wird eine Innentemperatur von 15 bis 20 °C aufrechterhalten.

5.2 Herstellung des Amins (Methode a/1)

Diese Carbamatreaktionsmischung wird wie in Beispiel 1.2 behandelt. Produktdaten in Tabelle 1.

Beispiel 6

6.1 Herstellung des Carbamats

Vorgelegt wird eine Lösung von 38,63 g Kaliumhydroxid (0,69 Mol) und 0,5 g Mersolat ®H in 800 ml Wasser. Unter Rühren wird innerhalb 45 Minuten 1 kg eines 65 °C warmen, aus 2,4-Toluylendiisocyanat und einem auf Trimethylolpropan gestarteten Polypropylen/Polyethylenblock-copolyethertriol der durchschnittlichen Molmasse 6 000 hergestellten und einen NCO-Wert von 1,93 aufweisenden, gedünnschichteten NCO-Prepolymers zugegeben ($OH^{\ominus}$ : NCO = 1,5). Dabei wird durch Kühlung eine Innentemperatur von 18 bis 22 °C aufrechterhalten, 1 Stunde wird bei 20 °C nachgerührt.

6.2 Herstellung des Amins (Methode a/1)

Diese Carbamat-Reaktionsmischung wird wie in Beispiel1.2 behandelt. Produktdaten in Tabelle 1.

Beispiel 7

7.1 Herstellung des Carbamats

Vorgelegt wird eine Lösung von 47,7 g Natriumhydroxid (1,19 mol), 0,6 g Mersolat ®H in 500 ml Wasser. Unter Rühren wird innerhalb 165 Minuten 1 kg eines 55 °C warmen, aus 2,4-Toluylendiisocyanat und einem Polypropylenglykol der durchschnittlichen Molmasse 2 000 hergestellten und einen NCO-Wert von 3,58 % aufweisenden, gedünnschichteten NCO-Prepolymers zugegeben ($OH^{\ominus}$ : NCO = 1,4). Dabei wird eine Innentemperatur von 15 bis 20 °C eingehalten. 45 Minuten wird bei 20 °C nachgerührt.

7.2 Herstellung des Amins (Methode a/1)

Diese Carbamat-Reaktionsmischung wird wie in Beispiel1.2 behandelt. Produktdaten in Tabelle 1.

Tabelle 1

| | Beispiel 5 | Beispiel 6 | Beispiel 7 |
|---|---|---|---|
| Ausbeute (g) | 970 (98%) | 980 (100%) | 970 (100%) |
| NH-Zahl (mgKOH/g) | 23,7 | 24,6 | 48,7 |
| Säurezahl (mgKOH/g) | 0,25 | 0,09 | 0,3 |
| Molmasse | 4700 | 7000 | 2400 |
| Viskosität η75 (mPa.s) | 1370 | 870 | 370 |
| Wassergehalt (%) | 0,35 | 0,1 | 0,1 |

Beispiel 8

8.1 Herstellung des Carbamats
Es wurde das gleiche Carbamat wie in Beispiel 1.1 verwendet.

8.2 Herstellung des Amins (Methode a/2 — mit Vakuum)
Aus 1 kg der frisch bereiteten Carbamat-Reaktions-mischung wird bei einer Badtemperatur von 80 °C (120 Minuten/20 mbar) und 100 °C (60 Minuten/0,6 mbar) unter Rühren das Wasser abdestilliert. Aus dem auf 70 °C abgekühlten Produktgemisch wird durch Filtration das Kohlendioxidsalz vom Amin abgetrennt.

| Produktdaten : | |
|---|---|
| Ausbeute | 485 g (98 %) |
| NH-Zahl | 44,3, 44,2 |
| Säurezahl | < 0,05 |
| Molmasse | 2 700 |
| Viskosität $\eta$ 75 | 417 mPa.s |
| Wassergehalt | 0,02 % |
| Gesamt-Stickstoffgehalt | 2,43 % |
| primärer Stickstoff | 1,07 % |

8.3

Das in Beispiel 8.2 beschriebene Amin wird mit praktisch identischen Analysenwerten auch dann erhalten, wenn die Abdestillation des Wassers mit einem Dünnschichter vorgenommen wird.

Beispiel 9

9.1 Herstellung des Carbamats
Es wird das Carbamat-Reaktionsgemisch aus Beispiel 4.1 verwendet.

9.2 Herstellung des Amins (Methode a/2)
Aus 1 kg der frisch bereiteten Carbamat-Reaktionsmischung wird bei einer Badtemperatur von 100 °C bei 20 bis 24 mbar (90 Minuten) und 0,6 mbar (30 Minuten) das Wasser abdestilliert. Aus dem auf 60 °C abgekühlten Produktgemisch wird durch Filtration das Kohlendioxidsalz vom Amin abgetrennt. Produktdaten in Tabelle 2.

Beispiel 10

10.1 Herstellung des Carbamats
Vorgelegt wird eine Lösung von 71,23 g Natriumhydroxid (1,78 Mol NaOH) in 1 l Wasser. Unter Rühren wird innerhalb 120 Minuten 1 kg eines 70 °C warmen, aus einem Gemisch aus 2,4-Toluylendiisocyanat (80 %) und 2,6-Toluylendiisocyanat (20 %) und einem Polypropylenglykolether des durchschnittlichen Molekulargewichts 1 000 hergestellten und einen NCO-Wert von 6,23 % aufweisenden, gedünnschichteten NCO-Prepolymers zugegeben ($OH^{\ominus}$/NCO-Verhältnis = 1,2 : 1). Dabei wird eine Innentemperatur von 15 bis 20 °C eingehalten. 30 Minuten wird bei 20°C nachgerührt.

10.2 Herstellung des Amins (Verfahren a/2)
Es wird wie bei Beispiel 9.2 verfahren, jedoch das Kohlensäuresalz bei 90 °C abgesaugt. Produktdaten in Tabelle 2.

Beispiel 11

11.1 Herstellung des Carbamats
Vogelegt wird eine Lösung von 180,8 g Natriumhydroxid (4,52 Mol NaOH) und 0,8 g Mersolat ®H in 1 l Wasser. Unter Rühren wird innerhalb 120 Minuten eine Lösung (20 °C) von 1 kg eines NCO-Prepolymers in 1 l Dioxan zugegeben. Dieses NCO-Prepolymer stellt ein gedünnschichtetes Prepolymer aus 1,6-Diisocyanatohexan und Dipropylenglykol dar und weist einen NCO-Wert von 14,6 % auf ($OH^{\ominus}$/NCO-Verhältnis 1,3 : 1). Dabei wird eine Innentemperatur von 15 bis 20 °C eingehalten. Bei 25 °C wird 45 Minuten nachgerührt.

11.2 Herstellung des Amins (Verfahren a/2)
Es wird wie bei Beispiel 9.2 verfahren. Produktdaten in Tabelle 2.

Tabelle 2

| | Beispiel 9 | Beispiel 10 | Beispiel 11 |
|---|---|---|---|
| Ausbeute (g) | 400 (86%) | 912 (95%) | 864 (95%) |
| NH-Zahl (mgKOH/g) | 43,2;43,5 | 70,4;69,6 | 190,0;189,7 |
| Säurezahl (mgKOH/g) | 0,05 | 0,1 | 0,1 |
| Molmasse | 2700 | 1600 | 600 |
| Viskosität $\eta_{75}$ (mPa.s) | 437 | 810 | 260 |
| Wassergehalt (%) | 0,09 | 0,2 | 0,15 |

Beispiel 12

12.1 Herstellung des Carbamats

Es wird die gleiche Carbamat-Reaktionsmischung verwendet, wie sie in Beispiel 1.1 beschrieben wurde.

12.2 Herstellung des Amins (Methode b) — Extraktion) 1 kg einer 1 Stunde alten Carbamatreaktionsmischung gemäß Beispiel 1.1 wird mit 1 l Dichlormethan versetzt und diese Mischung 4 Stunden bei 20 °C gerührt. Danach sind beide Phasen optisch klar und gut voneinander separierbar. Die organische Phase wird bei 100 °C/20 mbar und später 100 °C/1,3 mbar vom Solvens befreit. Es resultieren 400 g (87 %) eines Produkts, das eine NH-Zahl von 43,4, eine Säurezahl < 0,05 und einen Gehalt an primärem Stickstoff von 1,08 % aufweist.

Beispiel 13

13.1 Herstellung des Carbamats

Vorgelegt wird eine Mischung aus 204 g 50 %iger Kaliumhydroxidlösung (1,82 Mol KOH), 1,4 l Wasser und 1,5 g Mersolat ®H. Sie wird mit einem Eisbad extern gekühlt. Innerhalb 60 Minuten werden 1,5 kg eines 60 °C warmen, aus Toluylen-2,4-diisocyanat und einem Polypropylenglykolether der durchschnittlichen Molmasse 2 000 hergestellten und einen NCO-Wert von 3,4 % aufweisenden NCO-Prepolymers zugegeben ($OH^{\ominus}$ : NCO = 1,5 : 1). Dabei wird eine Innentemperatur von 18 bis 22 °C aufrechterhalten, 20 Minuten wird bei 20 °C nachgerührt.

13.2 Herstellung des Amins (Methode a/4 — salzbildendes Additiv)

1 kg des obigen Carbamat-Reaktionsgemisches wird mit 1 l eines 1 : 1-Gemisches aus Glykolmonomethylether und Glykolmonomethyletheracetat vermischt und 135 Minuten auf Rückfluß erhitzt. Dabei entwickeln sich 12,75 l Kohlendioxid. Nach Abdestillation der Lösungsmittel bei zuerst 100 °C/24-40 mbar und dann 100 °C/0,6 mbar wird das ausgefallene, Kaliumacetat enthaltende Salz (Nachweis durch IR-Spektroskopie und Elementaranalyse) abgesaugt.

| Produktdaten : | |
|---|---|
| Ausbeute : | 409 g (86,5 % d.Th.) |
| NH-Zahl | 43,5, 44,2 |
| Molmasse | 2 600 |
| Viskosität $\eta$ 75 | 406 mPa.s |
| Wassergehalt | 0,01 % |
| Gesamt-Stickstoffgehalt | 2,49 % |
| primärer Stickstoff | 1,10 % |

(Nach gaschromatographischer Analyse (GC) sind im aminischen Produkt Glykolmonomethylether und Glykolmonomethyletheracetat nicht zugegen).

Beispiel 14

100 Teile eines einen NCO-Gehalt von 6,75 % aufweisenden NCO-Prepolymeren, das aus einem aus 50 % 2,4-Diisocyanatodiphenylmethan und 50 % 4,4-Diisocyanatodiphenylmethan bestehenden Diisocyanatodiphenylmethan-Gemisch und einem eine durchschnittliche Molmasse von 1 500 aufweisenden

Polypropylenglykolether hergestellt wurde, werden auf 70 °C erwärmt. Mit dieser Isocyanatkomponente wird ein 70 °C warmes Vernetzergemisch vermischt, das aus

85 Teilen eines Aminopolyethers mit der NH-Zahl 39,4, der Molmasse 2 420 und einer Viskosität η 75 435 mPa.s, hergestellt nach dem erfindungsgemäßen Verfahren aus einem NCO-Prepolymer aus 2,4-Toluylendiisocyanat und einem eine durchschnittliche Molmasse von 2 000 aufweisenden Polypropylenglykolether ;

10 Teilen Diethyl-tolamin-Gemisch als Kettenverlängerer, und

0,1 Teilen 1,4-Diazabicyclooctan und

0,05 Teilen Dibutylzinndilaurat als Katalysatoren

besteht. Daten in Tabelle 3.

Beispiel 15

Ein Gemisch aus 60 Teilen eines Aminopolyethers, der eine NH-Zahl von 44,55, eine Molmasse von 2 370 und eine Viskosität von 357 mPa.s aufweist und nach dem erfindungsgemäßen Verfahren aus einem aus 2,4-Toluylendiisocyanat und einem eine durchschnittliche Molmasse von 2 000 aufweisenden Polypropylenglykolether hergestellten NCO-Prepolymeren erhalten wurde, und 40 Teilen Diethyltolamin wird bei 20 °C mit einem aus Tripropylenglykol und 4,4'-Diisocyanatodiphenylmethan erhaltenen und einem NCO-Wert von 23 % aufweisenden NCO-Semiprepolymer umgesetzt. Daten in Tabelle 3.

(Siehe Tabelle 3, Seite 19 f.)

Tabelle 3

| Beispiel 14 | | Beispiel 15 | |
|---|---|---|---|
| NCO-Prepolymer | 100 Tle | Aminopolyether<br>Diethyltolamin | 60 Tle<br>40 Tle. |
| Aminopolyether | 85 Tle | Diisocyanato-diphenylmethan | 23,5 Tle |
| Diethyl-tolamin-Gem. | 10 Tle | | |
| Diazabicyclooctan | 0,1 Tle | | |
| Dibutylzinndilaurat | 0,05 Tle | | |
| NCO-Gehalt des Prepolymers | 6,75 % | NCO-Gehalt des Isocyanats | 23 % |
| Kennzahl | 115 | Kennzahl | 100 |
| Vermischungsverhältnis Prepolymer/Vernetzergemisch | 100 : 77,3 Tle | Vermischungsverhältnis Vernetzergemisch/Isocyanat | 100 : 23,5 Tle |
| Zugversuch (DIN 53504) 100 [M Pa] | 2,9 | | 3,5 |
| 300 [M Pa] | 5,4 | | 7,5 |
| 500 [M Pa] | 8,0 | | 15,0 |
| $\varepsilon$ [M Pa] | 29,1 | | 18,9 |
| [%] | 885 | | 557 |
| Weiterreißversuch (DIN 53515) [KN/m] | 30,4 | | 21,6 |
| Shore-Härte (DIN 53505) [A] | 68 | | 68 |
| Elastizität (DIN 53512) [%] | 36 | | 25 |
| Druckverformungsrest (DIN 53517) (24 h - 70°C) [%] | 48 | | 32 |
| Abrieb (DIN 53516) [$mm^3$] | 104 | | 79 |
| Gießzeit | 13 sec. | | 10 sec. |
| Knickzeit | sofort knickfest | | sofort knickfest |

Beispiel 16

16.1 Herstellung des Carbamatgruppen enthaltenden Reaktionsgemisches in kontinuierlicher Verfahrensweise

Komponente I:

60 kg eines aus 2.4-Toluylendiisocyanat und einem bifunktionellen Polypropylenglykolether der durchschnittlichen Molmasse 2 000 hergestelltes NCO-Prepolymer des NCO-Gehaltes 3,59 %. Temperatur 25 °C.

Komponente II:

Gemisch aus 20 kg Wasser und 8,58 kg 50 %iger KOH-Lösung ($OH^{\ominus}$ : NCO = 1,5 : 1). Temperatur + 2 °C.

In einem mit 1 500 Upm betriebenen 500 ml-Stachelmischer werden bei einem Umsatz von 4 kg/min die Komponenten I und II miteinander vermischt. Der aus dem Stachelrührer austretende Produktstrom weist eine Temperatur von 44 °C auf.

Die Dosierung des NCO-Prepolymers erfolgt mit einer Zahnradpumpe in die zentrale Bohrung des Stachelrührers, die um 180° versetzte Dosierung der KOH-Lösung mit einer Lewa-Pumpe HL 2 durch zwei, je 3 mm Durchmesser aufweisende Bohrungen (Düsen). Der Stachelrührer wird mit einem – 20 °C kalten Kühlmedium temperiert.

16.2 Herstellung des Amins

Die Gewinnung des Amins aus obiger Reaktionsmischung erfolgt nach der in Beispiel 17.2 angegebenen Methode.

Produktdaten:

| | |
|---|---|
| Ausbeute | 57 kg (97,5 % d. Th.) |
| NH-Zahl | 48,6 |
| Säurezahl | < 0,01 |
| Molmasse | 2 400 |
| Viskosität 75 °C | 290 mPa.s |
| Wassergehalt (Karl Fischer) | 0,22 % |

Beispiel 17

17.1 Herstellung des Carbamatgruppen enthaltenden Reaktionsgemisches

Vorgelegt werden 200 g 50 %ige KOH-Lösung (1,79 Mol KOH), 500 g Wasser und 0,5 g Mersolat® H. Die Lösung wird mit einem Eisbad extern gekühlt. Innerhalb 1 Stunde werden 623 g einer Lösung von trimerem Toluylendiisocyanat in Butylacetat (NCO-Wert 8,05 %) zugegeben ($OH^{\ominus}$ : NCO = 1,5 : 1). Die Innentemperatur wurde auf 18 bis 25 °C gehalten und 60 minuten nachgerührt. Das Reaktionsgemisch ist sehr hochviskos.

17.2 Herstellung des Amins

Die obige Carbamatreaktionsmischung wird 3 Stunden bei einer Badtemperatur von 150 °C erhitzt, auf 80 °C abgekühlt und das feste, kristalline Produkt abgesaugt. Die Verbindung schmilzt über 200 °C und ist nur in hochpolaren Lösungsmitteln wie Dimethylformamid löslich.

Produktdaten:

| | |
|---|---|
| Ausbeute | 140 g (95 % d. Th.) |
| Molmasse (dampfdruckosmometrisch) | 782,5 |
| primärer Stickstoff | 7,4 % |
| IR (KBr) | Isocyanurat und Harnstoffbanden neben Amin |

Beispiel 18

18.1 Herstellung des Carbamats

Vorgelegt werden 45,4 g 50 %ige KOH-Lösung (0,405 Mol KOH), 480 g Wasser und 0,5 g Mersolat® H. Die Lösung wird mit einem Eisbad extern gekühlt. Innerhalb von 20 Minuten werden 500 g eines 60 °C warmen NCO-Prepolymeren, wie es in Beispiel 1.1 Verwendung fand, zugegeben ($OH^{\ominus}$ : NCO = 1 : 1). Die Innentemperatur beträgt 19 bis 22 °C und stieg gegen Ende der Reaktionskühlung auf 27 °C. 15 Minuten wird nachgerührt.

18.2 Herstellung des Amins

Die obige Carbamatreaktionsmischung wird 30 Minuten bei einer Badtemperatur von 150 °C gerührt. Dabei entweichen 1,4 l Kohlendioxid. Bei vermindertem Druck (17 mbar) und einer Badtemperatur von 150 °C und später reduzierter Temperatur und letztlich bis auf 0,1 mbar reduzierter Druck und 80 °C wird das Wasser und flüchtige Bestandteile abdestilliert. Das resultierende hochviskose Amin/Kohlensäuresalz-Gemisch wird mit 600 ml Dichlormethan aufgenommen und durch Filtration das Kohlensäuresalz abgetrennt. Aus der Dichlormethanphase wird das Polyamin nach Abdestillieren des Lösungsmittels als fast farbloses, hochviskoses Öl erhalten.

Produktdaten :

| | |
|---|---|
| Ausbeute | 413 g (84,5 % d. Th.) |
| NH-Zahl | 31,55 |
| Säurezahl | 0,3 |
| Molmasse | 3 900 |
| Viskosität η 75 °C | 2 050 mPa.s |
| Wassergehalt (Karl Fischer) | 0,02 % |

Beispiel 19

19.1 Herstellung des Carbamats

Vorgelegt werden 27,2 g 50 %ige KOH-Lösung (0,243 Mol KOH), 490 g Wasser und 0,5 g Mersolat® H. Die Lösung wird mit einem Eisbad extern gekühlt. Innerhalb von 20 Minuten werden 500 g eines 60 °C warmen NCO-Prepolymers, wie es in Beispiel 1.1 Verwendung fand, zugegeben ($OH^{\ominus}$ : NCO = 0,6 : 1). Die Innentemperatur wurde durch Kühlen im Bereich 20 bis 24 °C gehalten. 30 Minuten wurde nachgerührt.

19.2 Herstellung des Amins

Die obige Carbamatreaktionsmischung wird 30 Minuten bei einer Badtemperatur von 150 °C gerührt. Bei 16 mbar/150 °C und später 16 mbar/100 °C und anschließend 0,15 mbar/80 °C wird das Wasser abdestilliert. Dabei tritt nach Abdestillieren von ca. 200 g Wasser starke Verdickung auf. Das resultierende, sehr hochviskose Amin/Salz-Gemisch wird mit 1 l Dichlormethan versetzt und das Kohlensäuresalz abfiltriert. Das Dichlormethan wird anschließend wieder abdestilliert.

Produktdaten :

| | |
|---|---|
| Ausbeute | 381 g (78 % d. Th.) |
| NH-Zahl | 11,35 |
| Säurezahl | 0,04 |
| Molmasse | 10 000 |
| Viskosität η 75 °C | 59 000 mPa.s |
| Wassergehalt | 0,1 %. |

**Patentansprüche**

1. Verfahren zur Herstellung von aromatischen und/oder aliphatischen, primären Polyaminen durch Hydrolyse aromatisch und/oder aliphatisch gebundene, freie NCO-Gruppen aufweisender Verbindungen, dadurch gekennzeichnet, daß man

I) aromatische und/oder aliphatische, freie NCO-Gruppen aufweisende modifizierte Isocyanate, NCO-Prepolymere oder Semiprepolymere mit einem NCO-Gehalt von 0,5 bis 40 Gew.-%, gegebenenfalls gelöst in einem NCO-inerten Lösungsmittel, durch Vermischen mit starken Basen und mindestens der stöchiometrischen Menge Wasser in Carbamatgruppen aufweisende Verbindungen überführt und

II) zwecks Gewinnung des Polyamins direkt aus der Carbamatgruppen aufweisende Verbindungen enthaltenden Reaktionsmischung diese Reaktionsmischung entweder

a) unter Zerlegung der Carbamatgruppen aufweisenden Verbindung thermisch bei Temperaturen bis 200 °C behandelt und das Polyamin abtrennt oder

b) mit organischen Lösungsmittel extrahiert und gegebenenfalls das Polyamin aus der Lösungsmittelphase isoliert.

2. Verfahren nach Anspruch 1, dadurch gekennzeichnet, daß man als NCO-Verbindungen mehrwertige NCO-Voraddukte von Polyisocyanaten an höhermolekularen Polyhydroxylverbindungen aus der Reihe der Polyether, Polycarbonate, Polyacetale, Polythioether, Polysiloxane oder Polybutadiene mit Molekulargewichten von 400 bis 12 000 und/oder an NCO-reaktive Gruppen tragenden Kettenverlängerungsmitteln des Molekulargewichts 18 bis 399 verwendet.

3. Verfahren nach Ansprüchen 1 und 2, dadurch gekennzeichnet, daß man als Basen Alkalihydroxide, Erdalkalihydroxide und/oder quartäre Tetraalkylammoniumhydroxide in Mengen von 0,3 : 1 bis 2 : 1 Basenäquivalenten pro NCO-Äquivalent einsetzt.

4. Verfahren nach Ansprüchen 1 bis 3, dadurch gekennzeichnet, daß man die Basen in Form wäßriger Lösungen, gegebenenfalls in Gegenwart weiterer, gegenüber Isocyanat inerter Lösungsmittel, einsetzt.

5. Verfahren nach Ansprüchen 1 bis 4, dadurch gekennzeichnet, daß man die Carbamatgrupoen aufweisende Verbindungen enthaltende Reaktionsmischung zur Zerlegung des Carbamats bei Temperaturen bis zu 200 °C, gegebenenfalls in Gegenwart von Lösungsmitteln und unter Anlegung eines Vakuums behandelt.

6. Verfahren nach Ansprüchen 1 bis 5, dadurch gekennzeichnet, daß man aromatische, freie NCO-gruppen aufweisende Verbindungen in aromatische Polyamine überführt.

7. Verfahren nach Ansprüchen 1 bis 6, dadurch gekennzeichnet, daß man die Carbamatgruppen aufweisende Verbindungen enthaltende Reaktionsmischung mit einem mit Wasser nicht mischbaren organischen Lösungsmittel extrahiert.

8. Verfahren nach Ansprüchen 1 bis 7, dadurch gekennzeichnet, daß man die Carbamatgruppen aufweisende Verbindungen enthaltende Reaktionsmischung vor oder während der Isolierungsschritte II/a und/oder II/b mit einer unteräquivalenten Menge von 0,01 bis 0,99 Äquivalenten, bezogen auf die eingesetzte Menge an Base in Stufe 1, einer Säure behandelt.

9. Verfahren nach Ansprüchen 1 bis 8, dadurch gekennzeichnet, daß man das Polyamin durch Phasentrennung, Kristallisieren oder Extrahieren abtrennt.

10. Verwendung der Polyamine nach dem Verfahren 1 bis 9 als Reaktionskomponente bei der Umsetzung mit Polyisocyanaten und/oder blockierten Polyisocyanaten zu Polyurethanen.

**Claims**

1. Process for the production of aromatic and/or aliphatic, primary polyamines by the hydrolysis of compounds containing aromatically and/or aliphatically bound free NCO groups, characterised in that

I) aromatic and/or aliphatic modified isocyanates, NCO prepolymers or semiprepolymers which contain free NCO groups, have an NCO content of 0.5 to 40 % by weight and are optionally dissolved in an NCO-inert solvent, are converted into compounds containing carbamate groups by mixing them with strong bases an an at least stoichiometric quantity of water, and

II) for the purpose of recovering the polyamine directly from the reaction mixture containing the compounds containing carbamate groups, this reaction mixture is either

a) heat treated at temperatures of up to 200 °C to decompose the compound containing carbamate groups and the polyamine is separated off or

b) extracted with organic solvents and the polyamine is optionally isolated from the solvent phase.

2. Process according to Claim 1, characterised in that the NCO compounds used are polyfunctional NCO preadducts of polyisocyanates with higher molecular weight polyhydroxyl compounds from the series comprising polyethers, polycarbonates, polyacetals, polythioethers, polysiloxanes or polybutadienes having molecular weights of 400 to 12,000 and/or with chain-extending agents carrying NCO-reactive groups and having a molecular weight of 18 to 399.

3. Process according to Claims 1 and 2, characterised in that alkali hydroxides, alkaline earth hydroxides and/or quaternary tetraalkylammonium hydroxides are used as bases in quantities of 0.3 : 1 to 2 : 1 equivalents of base per NCO equivalent.

4. Process according to Claims 1 to 3, characterised in that the bases are used in the form of aqueous solutions, optionally in the presence of other isocyanate-inert solvents.

5. Process according to Claims 1 to 4, characterised in that, to decompose the carbamate, the reaction mixture containing compounds containing carbamate groups is treated at temperatures of up to 200 °C, optionally in the presence of solvents and with the application of a vacuum.

6. Process according to Claims 1 to 5, characterised in that aromatic compounds containing free NCO groups are converted into aromatic polyamines.

7. Process according to Claims 1 to 6, characterised in that the reaction mixture containing compounds containing carbamate groups is extracted with a water-immiscible organic solvent.

8. Process according to Claims 1 to 7, characterised in that the reaction mixture containing compounds containing carbamate groups is treated, before or during the isolation steps II/a and/or II/b, with a sub-equivalent quantity of 0.01 to 0.99 equivalents, based on the quantity of base used in step 1, of an acid.

9. Process according to Claims 1 to 8, characterised in that the polyamine is separated off by phase separation, crystallisation or extraction.

10. Use of the polyamines according to process 1 to 9 as a reaction component in the reaction with polyisocyanates and/or blocked polyisocyanates to form polyurethanes.

**Revendications**

1. Procédé de préparation de polyamines aromatiques et/ou aliphatiques primaires par hydrolyse de composés comportant des groupes NCO libres, fixés par voie aromatique et/ou aliphatique, caractérisé en ce que :

I) on transforme, en composés comportant des groupes carbamate, des prépolymères de NCO, des semi-prépolymères de NCO ou des isocyanates modifiés aromatiques et/ou aliphatiques comportant des groupes NCO libres et ayant une teneur en NCO de 0,5 à 40 % en poids, éventuellement en solution dans un solvant inerte vis-à-vis des groupes NCO, par mélange avec des bases fortes et au moins la quantité stœchiométrique d'eau, et

II) en vue d'obtenir la polyamine directement à partir du mélange réactionnel contenant des composés comportant des groupes carbamate,

a) avec décomposition du composé comportant des groupes carbamate, on soumet ce mélange réactionnel à un traitement thermique à des températures allant jusqu'à 200 °C et on sépare la polyamine, ou

b) on extrait ce mélange réactionnel avec un solvant organique et on isole éventuellement la polyamine de la phase de solvant.

2. Procédé selon la revendication 1, caractérisé en ce que, comme composés de NCO, on utilise des produits de pré-addition de NCO polyvalents de polyisocyanates à des composés polyhydroxy de poids moléculaire très élevé choisis parmi la série des polyéthers, des polycarbonates, des polyacétals, des polythioéthers, des polysiloxanes ou des polybutadiènes ayant des poids moléculaires de 400 à 12 000 et/ou à des agents d'allongement de chaîne comportant des groupes réactifs vis-à-vis des groupes NCO et ayant un poids moléculaire se situant entre 18 et 399.

3. Procédé selon les revendications 1 et 2, caractérisé en ce que, comme bases, on utilise des hydroxydes de métaux alcalins, des hydroxydes de métaux alcalino-terreux et/ou des hydroxydes de tétra-alkyl-ammonium quaternaires en quantités de 0,3 : 1 à 2 : 1 d'équivalents de bases par équivalent de NCO.

4. Procédé selon les revendications 1 à 3, caractérisé en ce qu'on utilise les bases sous forme de solutions aqueuses, éventuellement en présence d'autres solvants inertes vis-à-vis des isocyanates.

5. Procédé selon les revendications 1 à 4, caractérisé en ce que, pour décomposer le carbamate, on traite le mélange réactionnel contenant des composés comportant des groupes carbamate à des températures allant jusqu'à 200 °C, éventuellement en présence de solvants et avec application d'un vide.

6. Procédé selon les revendications 1 à 5, caractérisé en ce qu'on transforme des composés aromatiques comportant des groupes NCO libres en polyamines aromatiques.

7. Procédé selon les revendications 1 à 6, caractérisé en ce qu'on extrait le mélange réactionnel contenant des composés comportant des groupes carbamate avec un solvant organique non miscible à l'eau.

8. Procédé selon les revendications 1 à 7, caractérisé en ce que, avant ou pendant les étapes d'isolation II/a et/ou II/b, on traite le mélange réactionnel contenant des composés comportant des groupes carbamate avec une quantité hypo-équivalente de 0,01 à 0,99 équivalent (calculé sur la quantité de base utilisée à l'étape 1) d'un acide.

9. Procédé selon les revendications 1 à 8, caractérisé en ce qu'on sépare la polyamine par séparation de phases, par cristallisation ou par extraction.

10. Utilisation des polyamines obtenues selon le procédé des revendications 1 à 9 comme composants réactionnels lors de la réaction avec des polyisocyanates et/ou des polyisocyanates bloqués pour obtenir des polyuréthanes.